# EUROPEAN PATENT SPECIFICATION

(11) **EP 2 555 494 B1**
(45) Date of publication and mention of the grant of the patent: **08.05.2019**
(21) Application number: 11765750.2
(22) Date of filing: 31.03.2011
(51) Int. Cl.: H01Q 7/00, H01Q 1/24, H01Q 1/22

(54) **ANTENNA DEVICE AND COMMUNICATION DEVICE**
ANTENNENVORRICHTUNG UND KOMMUNIKATIONSVORRICHTUNG
DISPOSITIF D'ANTENNE ET DISPOSITIF DE COMMUNICATION

(30) Priority: 31.03.2010 JP 2010082037; 28.03.2011 JP 2011070666
(43) Date of publication of application: 06.02.2013
(73) Proprietor: Dexerials Corporation, Tokyo (JP)
(72) Inventor: ORIHARA, Katsuhisa, Tokyo 141-0032 (JP); IKEDA, Yoshito, Tokyo 141-0032 (JP); SAITO, Norio, Tokyo 141-0032 (JP); SUGITA, Satoru, Tokyo 141-0032 (JP)
(74) Representative: Müller Hoffmann & Partner
(86) International application number: PCT/JP2011/058245
(87) International publication number: WO 2011/125850

(56) References cited:
- EP-A1- 1 901 393
- JP-A- 2004 166 176
- JP-A- 2005 333 244
- JP-A- 2007 013 662
- US-A1- 2003 016 133
- US-A1- 2005 007 296
- US-A1- 2007 205 291
- US-A1- 2009 021 352
- US-A1- 2009 033 567

## Description

### Field of the Invention

This present invention relates to an antenna device and a communication device that are built in an electronic device and can perform communication by receiving a magnetic field transmitted from a transmitter.

### Background of the Invention

An electronic device such as a mobile phone uses an antenna module for RFID (Radio Frequency Identification) to mount a near field contactless communication function thereon.

The antenna module performs communication with an antenna coil mounted on a transmitter such as a reader/writer by using inductive coupling. More specifically, in the antenna module, the antenna coil receives a magnetic field from the reader/writer to make it possible to drive an IC that converts the magnetic field into an electric power to function as a communication processing unit.

The antenna module must receive a magnetic flux having a certain value or more from the reader/writer to reliably perform communication. For this purpose, in the antenna module according to the conventional technique, a loop coil is arranged in the housing of the mobile phone to receive a magnetic flux from the reader/writer with the coil.

However, in an antenna module built in an electronic device such as a mobile phone, since magnetic fluxes from the reader/writer are reflected by an eddy current generated when a metal contained in a circuit board in the device or a battery pack receives a magnetic field from the reader/writer, a smaller number of magnetic fluxes reach the loop coil. In this manner, since the number of magnetic fluxes reaching the loop coil becomes small, the antenna module requires a loop coil having a certain size to collect required magnetic fluxes. Furthermore, the number of magnetic fluxes must be increased by using a magnetic sheet.

As described above, magnetic fluxes from a reader/writer are reflected by an eddy current flowing in a circuit board of an electronic device such as a mobile phone, some magnetic field components face a surface direction of the circuit board are present on a housing source of the electronic device. A coil that receive the components to function as an antenna is proposed in Patent Document 1. More specifically, in Patent Document 1, in order to reduce an occupied area of a coil, an antenna structure obtained by winding a coil on a ferrite core is proposed.

US 2005/007296 A1 discloses an antenna coil that includes an air-core coil wound helically in a plane and a plate magnetic core member inserted in the air-core coil to be approximately parallel with a plane of the air-core coil. The magnetic core member is formed by a soft magnetic metal, an amorphous or ferrite, or a composite member of a powder, flake and plastic, or rubber. The magnetic core member is formed by performing an injection molding operation or a compressing molding operation of the composite member. Alternatively, the magnetic core member is a magnetic coating formed by applying and drying the composite member. A non-magnetic conductive plate is layered on a surface of the air-core coil through which the magnetic core member is inserted. The conductive plate is made of copper, a copper alloy, aluminum or an aluminum alloy having 0.01 to 2 mm thickness.

EP 1 901 393 A1 discloses an antenna apparatus for use in a non-contact type IC card into and from which data can be written and read by an electronic apparatus having a communication function, by virtue of inductive coupling. The antenna apparatus includes a loop coil and a magnetic member. The loop coil is produced by winding a conductive wire in a plane and configured to perform the inductive coupling with the electronic apparatus. The magnetic member covers one region of the loop coil, provided at one side, from one surface of the loop coil, passes through the loop coil, and covers the other region of the loop coil, provided at the other side, from the other surface of the loop coil.

US 2007/205291 A1 discloses an antenna apparatus for use in a non-contact type IC card into and from which data can be written and read by electronic apparatuses having a communication function, by virtue of inductive coupling. The antenna apparatus comprises a loop coil and a magnetic member. The loop coil is produced by winding a conductive wire in a plane and configured to perform the inductive coupling. The magnetic member covers one region of the loop coil, provided at one side, from one surface of the loop coil, passes through the loop coil, and covers the other region of the loop coil, provided at the other side, from the other surface of the loop coil. The entire region of the loop coil is thus covered.

US 2009/033567 A1 discloses a non-contact communication antenna unit capable of implementing a thickness reduction of a mobile communication device and also suppressing a reduction in a communication range characteristic of a non-contact communication antenna even when metal components such as circuit wirings, a circuit GND, a shielding case, etc. being arranged on the inside of the mobile communication device are arranged in close vicinity to the non-contact communication antenna. A non-contact communication antenna and a magnetic sheet arranged on one surface of a non-contact communication circuit board respectively, and an non-contact communication electronic components and a magnetic sheet arranged on the other surface of the non-contact communication circuit board respectively are provided, whereby the magnetic sheet and the magnetic sheet are arranged on the non-contact communication circuit board such that the non-contact communication antenna and the non-contact communication electronic component are separated mutually.

US 2003/016133 A1 discloses radio frequency identification tag devices with bridge circuit assemblies and methods for high-volume, low-cost production. The disclosed bridge circuit assemblies and methods provide a one-sided circuit design. The resonant frequency of the circuits formed on the devices may be tuned by severing selected connections to one or more tuning capacitor plates that form a part of the capacitor structure. Severing connections to the tuning capacitor plates changes the capacitance of the circuit that, in turn, changes the resonant frequency of the circuit.

### Patent Literature

Patent Document 1: Japanese Unexamined Patent Publication No. 2008-35464

### Summary of the Invention

As described above, since an electronic device such as a mobile phone uses a circuit board or the like that is relatively conductive, an eddy current is generated in the circuit board that receives a magnetic field to reflect the magnetic field. For example, in consideration of the housing surface of a mobile phone, a magnetic field transmitted from a reader/writer tends to be strong at a peripheral portion of the housing surface and to be weak near the center of the housing surface.

In an antenna using a normal loop coil, the loop coil has an opening located at a center portion of a mobile phone that cannot receive a large amount of magnetic field passing through the outer peripheral portion of the housing surface described above. For this reason, in an antenna using a normal loop coil, efficiency of receiving a magnetic field is deteriorated.

In an antenna structure in which a coil is winded on a ferrite core described in Patent Document 1 and the coil is built in a mobile phone, a section of the ferrite core has an area that collects magnetic fluxes. For this reason, the ferrite core requires a thickness of, for example, 1 mm or more, and the housing of the mobile phone has a relatively thick structure. Thus, in a relatively thin mobile phone, the structure is difficult to be mounted. When the antenna module is built on a rear side of a liquid-crystal display mounted on a foldable mobile phone, the antenna module is also required to be thin. For this reason, a space for the antenna structure described in Patent Document 1 cannot be easily secured.

The present invention has been proposed in consideration of the above circumstances, and has as its object to provide an antenna device and a communication device that can reduce a housing of an electronic device in size and thickness when the antenna device and the communication device are built in the electronic device while keeping communication characteristics.

The above problem is solved by the subject-matter of the independent claims.

According to the present invention, the antenna coil and the magnetic sheet are superposed on each other to satisfy at least one of the arrangement conditions including the arrangement condition in which the magnetic sheet is located on the transmitter side of the antenna coil on the center side of the housing surface and the arrangement condition in which the antenna coil is located on the transmitter side of the magnetic sheet on the outer periphery side of the housing surface. When the magnetic sheet is arranged as described above, according to the present invention, magnetic fluxes generated on the outer peripheral portion of the housing surface of the electronic device facing the transmitter can be efficiently attracted to the antenna coil to make it possible to reduce the housing of the electronic device in size and thickness when the antenna device or the communication device is built in the electronic device by arranging the antenna coil on the outer peripheral portion while maintaining communication characteristics.

### Brief Description of the Drawings

FIG. 1 is a diagram for explaining a configuration of a wireless communication system in which a communication device to which the present invention is applied is built.
FIG. 2 is a diagram for explaining a configuration of a communication device arranged in a housing of a mobile phone.
FIG. 3A is a perspective view of an antenna substrate according to a first example, and FIG. 3B is a sectional view of an antenna substrate according to the first example.
FIG. 4A is a perspective view of an antenna substrate according to a first comparative example, and FIG. 4B is a sectional view of the antenna substrate according to the first comparative example.
FIG. 5 is a graph showing a measurement result related to communication characteristics between the communication device according to the first example and the communication device according to the first comparative example.
FIG. 6A is a perspective view of an antenna substrate according to a second comparative example, and FIG. 6B is a sectional view of the antenna substrate according to the second comparative example.
FIG. 7 is a graph showing a measurement result related to communication characteristics between the communication device according to the first example and the communication device according to the second comparative example.
FIG. 8 is a perspective view of an antenna substrate in which the number of turns of an antenna coil is set to 8, a width W orthogonal to an outer periphery is set to 10 [mm], a length along the outer periphery is set to L [mm], and a magnetic sheet is inserted into a center portion of the antenna coil in the communication device according to a second example.
FIG. 9 is a diagram for explaining a configuration of a communication device according to a third comparative example.
FIG. 10 is a graph for explaining changes of communication characteristics when an area of the antenna coil is changed by changing a value of a length L of one side of the antenna coil.
FIG. 11A is a perspective view of an antenna substrate according to a third example, and FIG. 11B is a sectional view of the antenna substrate according to the third example.
FIG. 12A is a perspective view of an antenna substrate according to a fourth example, and FIG. 12B is a sectional view according to the antenna substrate according to the fourth example.
FIG. 13 is a graph for explaining communication characteristics of a reader/writer and communication devices when distances between the reader/writer and a mobile telephone is changed.
FIG. 14A is a diagram showing a configuration of a configuration of a conductive plate superposed on an antenna substrate according to a fifth example, and FIG. 14B is a perspective view showing the antenna substrate according to the fifth example.
FIG. 15A is a graph for explaining characteristics of a resistance of the antenna coil according to the fifth example, FIG. 15B is a graph for explaining characteristics of an inductance of the antenna coil according to the fifth example.
FIG. 16 is a graph for explaining characteristics of a Q value of the antenna coil according to the fifth example.
FIG. 17A is a diagram showing a configuration of a conductive plate superposed on an antenna substrate according to a fourth comparative example, and FIG. 17B is a perspective view showing the antenna substrate according to the fourth comparative example.
FIG. 18A is a diagram showing a configuration of a conductive plate superposed on an antenna substrate according a fifth comparative example, and FIG. 18B is a perspective view showing the antenna substrate according to the fifth comparative example.
FIG. 19A is a graph for explaining characteristics of a resistance of an antenna coil according to the fifth example, and FIG. 19B is a graph for explaining characteristics of an inductance of the antenna coil according to the fifth example.
FIG. 20 is a graph for explaining characteristics of a Q value of the antenna coil according to the fifth example.
FIG. 21 is a diagram for explaining a change of communication characteristics of the antenna coil according to the fifth example depending on a change of the shape of the conductive plate.
FIG. 22A is a graph showing a Q value of the antenna coil according to the fifth example depending on the change of the shape of the conductive plate, and FIG. 22B is a graph showing a coupling coefficient of the antenna coil according to the fifth example depending on the change of the shape of the conductive plate.
FIG. 23 is a diagram for explaining a concrete arrangement of the antenna substrate according to a fifth embodiment.
FIG. 24A is a diagram for explaining a configuration of the antenna substrate according to the fifth embodiment mounted on a surface of a storing lid, and FIG. 24B is a diagram for explaining a configuration of a terminal portion formed on the antenna substrate according to the fifth embodiment.
FIG. 25A is a diagram showing a positional relationship between a communication device according to a sixth example and a reader/writer, and FIG. 25B is a sectional view of an antenna substrate according to the communication device according to the sixth example.
FIG. 26 is a diagram showing a communication device having a structure in which an antenna coil is inserted between magnetic sheets each having both horizontal surfaces such that a step portion is formed on a center portion of the antenna substrate.
FIG. 27A is a graph showing a coupling coefficient of the communication device according to the sixth example when the magnetic sheet is change in thickness while keeping the thickness of the antenna substrate constant, and FIG. 27B is a graph showing a coupling coefficient of the communication device according to the sixth example when the antenna substrate is changed in thickness while keeping the thickness of the magnetic sheet constant.
FIG. 28 is a graph showing a coupling coefficient obtained when a conductive line of the antenna coil according to the sixth example is changed in thickness in concrete examples of three types in which total thicknesses of antenna substrates and magnetic sheets are set to 0.3 mm, 0.4 mm, and 0.5 mm.
FIG. 29 is a graph showing Q values obtained when a conductive line of the antenna coil according to the sixth example is changed in thickness in concrete examples of three types in which total thicknesses of antenna substrates and magnetic sheets are set to 0.3 mm, 0.4 mm, and 0.5 mm.
FIG. 30 is a graph showing products of coupling coefficients and Q values obtained when a conductive line of the antenna coil according to the sixth example is changed in thickness in concrete examples of three types in which total thicknesses of antenna substrates and magnetic sheets are set to 0.3 mm, 0.4 mm, and 0.5 mm.
FIG. 31A is a diagram showing an antenna substrate arranged on an outer peripheral portion on an outer periphery 130d side, FIG. 31B is a diagram showing an antenna substrate arranged on an outer peripheral portion on another outer periphery 130b side, FIG. 31C is a diagram showing an antenna substrate arranged on an outer peripheral portion on still another outer periphery 130a side, and FIG. 31D is a diagram showing an antenna substrate arranged on an outer peripheral portion on still another outer periphery 130c side.
FIG. 32 is a graph for explaining a change in communication sensitivity when relative positions of a mobile phone in which a communication device is built and a reader/writer are changed.
FIG. 33A is a diagram showing two antenna substrates arranged on outer peripheral portions on the outer periphery 130b side and the outer periphery 130d side, and FIG. 33B is a diagram showing two antenna substrates arranged on outer peripheral portions on the outer periphery 130a side and the outer periphery 130c side.
FIG. 34A is a diagram showing three antenna substrates arranged on the outer peripheral portions of the outer periphery 130a side, the outer periphery 130b side, and the outer periphery 130d side, and FIG. 34B is a diagram showing two antenna substrates arranged on the outer peripheral portions of the outer periphery 130a side, the outer periphery 130c side, and the outer periphery 130d side.
FIG. 35 is a diagram showing four antenna substrates arranged on the outer peripheral portions of the outer periphery 130a side, the outer periphery 130b side, the outer periphery 130c side, and the outer periphery 130d side.

### Detailed Description of the Invention

Embodiments to execute the present invention will be described in detail with reference to the accompanying drawings. The present invention is not limited to only the embodiments, and various changes of the present invention can be effected without departing from the scope of the invention, as a matter of course.

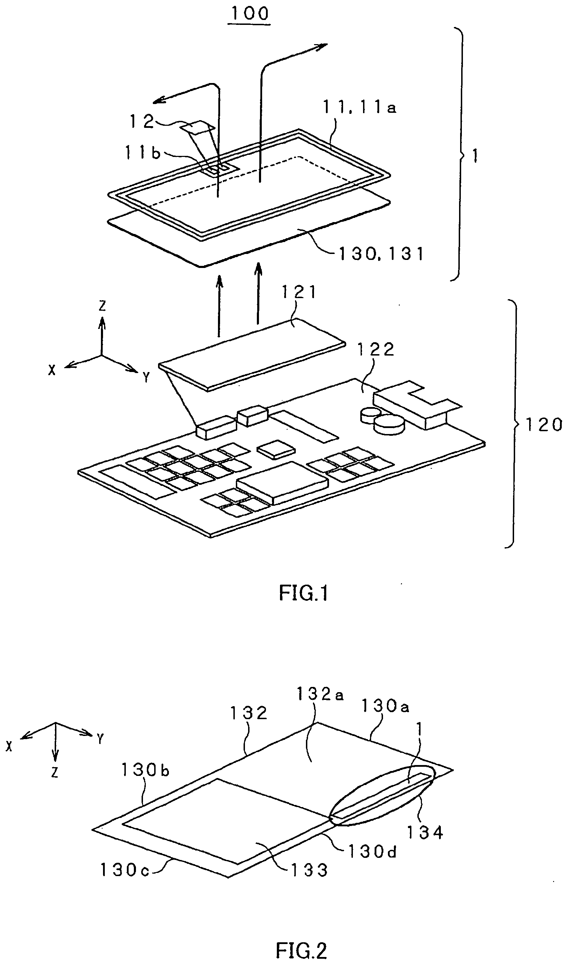

A communication device to which the present invention is applied is a device that is built in an electronic device and that can perform communication by receiving a magnetic field transmitted from a transmitter.
The communication device is used by being built in a wireless communication system 100 for RFID (Radio Frequency Identification) as shown in, for example, FIG. 1.

The wireless communication system 100 includes a communication device 1 according to a first example to which the present invention is applied and a reader/writer 120 that accesses the communication device 1. In this case, it is assumed that the communication device 1 and the reader/writer 120 are arranged to face each other on an x-y plane of a three-dimensional orthogonal coordinate system xyz.

The reader/writer 120 functions as a transmitter that transmits a magnetic field in a z-axis direction to the communication device 1 facing the reader/writer 120 on the x-y plane. More specifically, the reader/writer 120 includes an antenna 121 that transmits a magnetic field to the communication device 1 and a control board 122 that communicates with the communication device 1 inductively coupled through the antenna 121.

More specifically, in the reader/writer 120, the control board 122 electrically connected to the antenna 121 is arranged. A control circuit including electronic parts such as one or a plurality of integrated circuit chips is mounted on the control board 122. The control circuit executes processes of various types on the basis of data received from the communication device 1. For example, when the control circuit transmits data to the communication device 1, the control circuit encodes the data, modulates a carrier wave having a predetermined frequency (for example, 13.56 MHz) on the basis of the encoded data, amplifies the modulated modulating signal, and causes the modulating signal to drive the antenna 121.

When the control circuit reads data from the communication device 1, the control circuit amplifies a modulating signal of the data received by the antenna 121, demodulates the amplified modulating signal of the data, and decodes the demodulated data. In the control circuit, an encoding method and a modulating method used in a general reader/writer are used. For example, the Manchester encoding method or the ASK (Amplitude Shift Keying) modulating method is used.

The communication device 1 is built in a housing 131 of a mobile phone 130 arranged to face the reader/writer 120 on the x-y plane, and includes an antenna substrate 11 on which an antenna coil 11a that can communicate with the inductively coupled reader/writer 120 is mounted, and a communication processing unit 12 that is driven by a current flowing in the antenna coil 11a to communicate with the reader/writer 120.

On the antenna substrate 11, the antenna coil 11a formed by performing a patterning process or the like to a flexible conductor such as a flexible flat cable and a terminal unit 11b electrically connected to the antenna coil 11a and the communication processing unit 12.

When the antenna coil 11a receives a magnetic field generated from the reader/writer 120, the antenna coil 11a magnetically coupled to the reader/writer 120 by inductive coupling, receives a modulated carrier wave, and supplies the received signal to the communication processing unit 12 through the terminal unit 11b.

The communication processing unit 12 is driven by a current flowing in the antenna coil 11a and communicates with the reader/writer 120. More specifically, the communication processing unit 12 demodulates the received modulating signal, decodes the demodulated data, and writes the decoded data in an internal memory included in the communication processing unit 12.

The communication processing unit 12 reads data transmitted to the reader/writer 120 from the internal memory, encodes the read data, modulates a carrier wave on the basis of the encoded data, and transmits the modulated radio wave to the reader/writer 120 through the antenna substrate 11 magnetically coupled by inductive coupling.

### <First Embodiment>

In the wireless communication system 100 having the above configuration, the configuration of the communication device 1 according to the first example will be described below as the first embodiment.

The communication device 1 according to the first example, in terms of realization of reductions in size and thickness of an electronic device such as the mobile phone 130 when the communication device 1 is built in the electronic device while maintaining communication characteristics between the reader/writer 120 and the communication device 1, for example, is arranged on a circuit board 132 in the housing 131 of the mobile phone 130 on a Z-y plane of the three-dimensional orthogonal coordinate system xyz. In FIG. 2, it is assumed that a magnetic sheet 133 to cover a battery pack to drive the mobile phone 130 is arranged in a partial region of the circuit board 132 in the housing 131 of the mobile phone 130.

The antenna coil 11a of the communication device 1 is preferably arranged at a position where a magnetic field from the reader/writer 120 is strong to maintain the communication characteristics between the antenna coil 11a and the reader/writer 120. In this case, since the circuit board 132 of the mobile phone 130 easily conducts electricity, an eddy current is generated when an external AC magnetic field is applied to the circuit board 132 to reflect a magnetic field. When a magnetic field distribution obtained by applying an external AC is examined, magnetic fields of the four peripheries 130a, 130b, 130c, and 130d that are outer peripheries on the surface of the housing 131 of the mobile phone 130 arranged to face the reader/writer 120 are strong.

In this case, by using the characteristics of magnetic field strength in the housing 131 of the mobile phone 130, the communication device 1, as shown in FIG. 2, is arranged on an outer peripheral portion 134 on the outer periphery 130d side of the outer peripheries 130a, 130b, 130c, and 130d having strong magnetic fields. In this manner, the communication device 1 can be arranged at a position where a magnetic field strength on the circuit board 132 of the mobile phone 130 is relatively high.

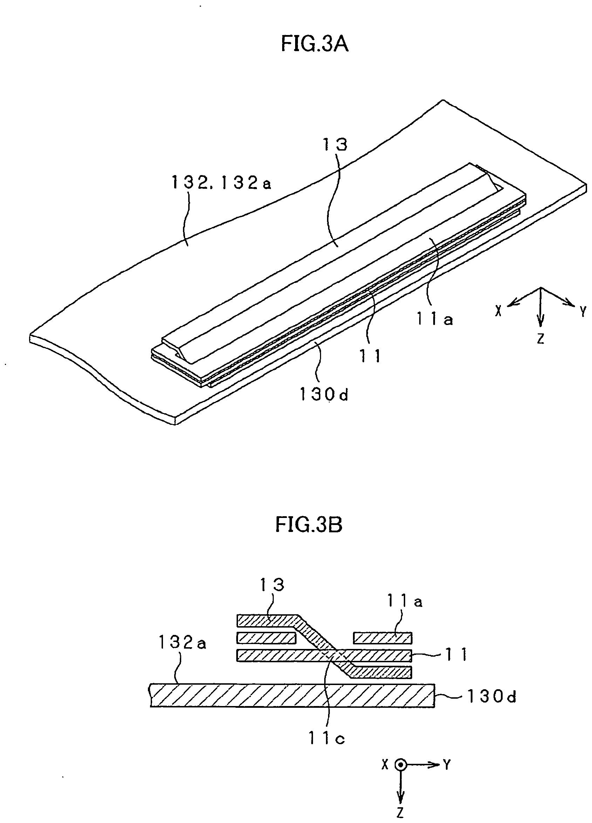

A magnetic field of the outer peripheral portion 134 on which the communication device 1 is arranged has a large magnetic field component in a planar direction of the circuit board 132, more specifically, a large y-direction component from a center portion 132a of the circuit board 132 to the outer periphery 130d. The communication device 1 includes a magnetic sheet 13 that is arranged as shown in FIGS. 3A and 3B to cause the antenna coil 11a to efficiently attract the component from the center portion 132a of the circuit board 132 to the outer periphery 130d and is superposed on the antenna coil 11a.

In this case, FIG. 3A is a perspective view of the antenna substrate 11 in which the magnetic sheet 13 is inserted on an x-y plane, and FIG. 3B is a sectional view of the antenna substrate 11 in which the magnetic sheet 13 is interposed on the x-y plane. In the communication device 1 shown in FIGS. 3A and 3B, the number of turns of the antenna coil 11a is set to 1.

As shown in FIG. 3B, in the communication device 1, the magnetic sheet 13 is inserted into a center portion 11c of the antenna coil 11a formed on the antenna substrate 11 such that, on the center portion 132a side of the circuit board 132, the magnetic sheet 13 is arranged to be located on the reader/writer 120 side of the antenna coil 11a, and on the outer periphery 130d side of the circuit board 132, the antenna coil 11a is arranged.

In this case, as the antenna substrate 11, as described above, a flexible printed circuit board, a rigid printed circuit board, or the like is used. However, in particular, by using the flexible printed circuit board, a notched portion can be easily formed in the center portion of the antenna coil 11a, and the magnetic sheet 13 can be easily inserted into the notched portion. In this manner, in terms of easily insertion of the magnetic sheet 13 into the antenna substrate 11, in the communication device 1, the antenna substrate 11 is preferably formed by using the flexible printed circuit board. More specifically, by using the flexible printed circuit board, the communication device 1 can be easily manufactured.

In this manner, in the communication device 1, on the center portion 132a side of the circuit board 132, the magnetic sheet 13 is arranged to be located on the reader/writer 120 side of the antenna coil 11a, and on the outer periphery 130d side of the circuit board 132, the antenna coil 11a is arranged to be located on the reader/writer 120 side of the magnetic sheet 13. In this manner, as is apparent from the performance evaluation performed in comparison with the following first and second comparative example, a magnetic field generated on the outer peripheral portion 134 can be efficiently attracted by the antenna coil 11a.

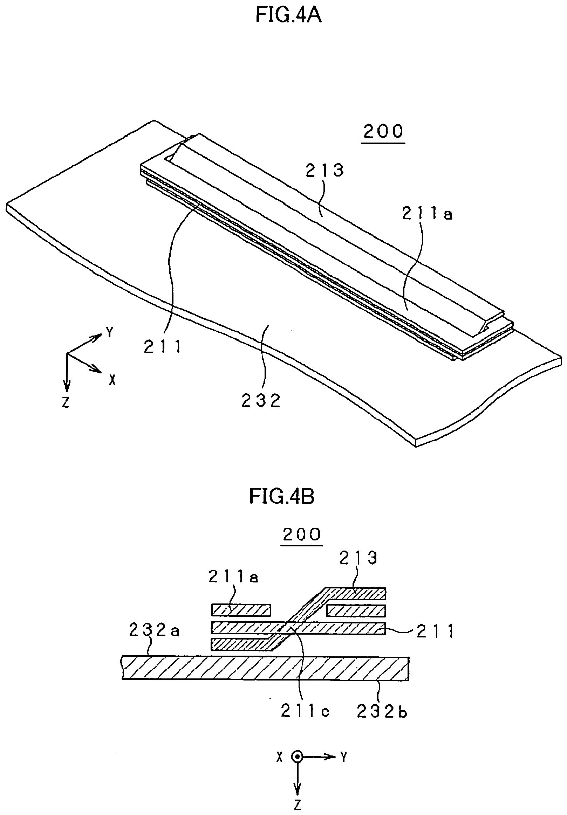

As the first comparative example, the configuration of a communication device 200 arranged on a circuit board 232 of a mobile phone will be described below with reference to FIGS. 4A and 4B. FIG. 4A is a perspective view of an antenna substrate 211 on which a magnetic sheet 213 is arranged on an x-y plane, and FIG. 4B is a sectional view of the antenna substrate 211 on which the magnetic sheet 213 is arranged on the x-y plane. In the communication device 200 shown in FIGS. 4A and 4B, like the communication device 1 according to the first example shown in FIGS. 3A and 3B, it is assumed that the number of turns of an antenna coil 211a is set to 1 and that antenna characteristics determined by design conditions such as an antenna size are equal to those in the communication device 1.

As shown in FIG. 4B, in the communication device 200 according to a comparative example, as in the communication device 1 according to the embodiment, although a magnetic sheet is inserted into the center portion of an antenna substrate, the magnetic sheet is inserted from a different direction. More specifically, the magnetic sheet 213 according to the communication device 200 is arranged such that, on a center portion 232a of the circuit board 232, the antenna coil 211a is arranged to be located on a reader/writer side and, on an outer periphery side 232b of the circuit board 232, the magnetic sheet 213 is arranged to be located on the reader/writer side of the antenna coil 211a.

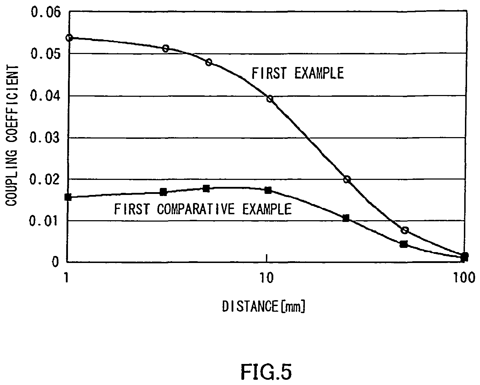

A measurement result related to communication characteristics between the communication device 1 according to the first example and the communication device 200 according to the first comparative example is shown in FIG. 5.

FIG. 5 shows coupling coefficients between a reader/writer and the communication devices 1 and 200 when a distance between a reader/writer and a mobile phone is changed. In this case, the coupling coefficients are values representing (mutual inductance/√(inductance of antenna coil x inductance of reader/writer coil)), and is used as an index to evaluate communication characteristics.

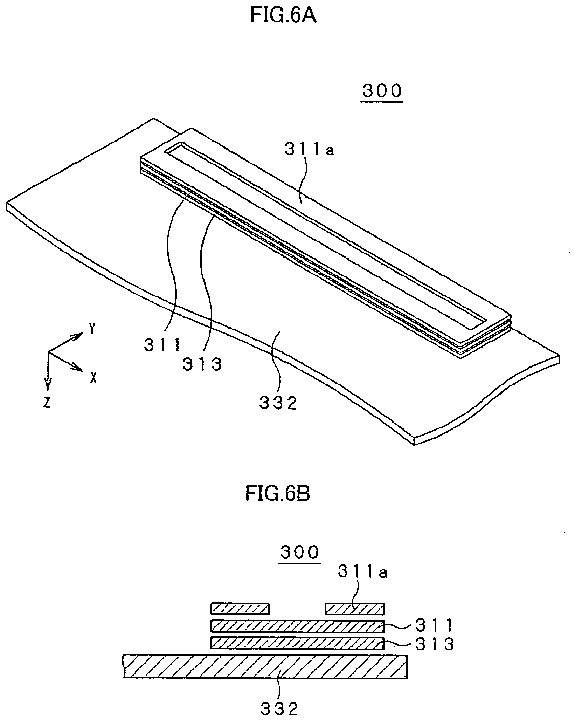

As a second comparative example, a configuration of a communication device 300 arranged on a circuit board 332 of a mobile phone will be described below with reference to FIGS. 6A and 6B. FIG. 6A is a perspective view of an antenna substrate 311 on which a magnetic sheet 313 is arranged on an x-y plane, and FIG. 6B is a sectional view of the antenna substrate 311 on which the magnetic sheet 313 is arranged on the x-y plane. In the communication device 300 shown in FIGS. 6A and 6B, as in the communication device 1 according to the example shown in FIGS. 3A and 3B, it is assumed that the number of turns of an antenna coil 311a is set to 1 and that antenna characteristics determined by design conditions such as an antenna size are equal to those in the communication device 1. As shown in FIG. 6B, in the communication device 300 according to the second comparative example, regardless of distinction between an outer periphery side and an inner periphery side, the magnetic sheet 313 is arranged at a position where the magnetic sheet 313 is superposed on the antenna coil 311a such that the antenna coil 311a is closer to the reader/writer than the magnetic sheet 313.

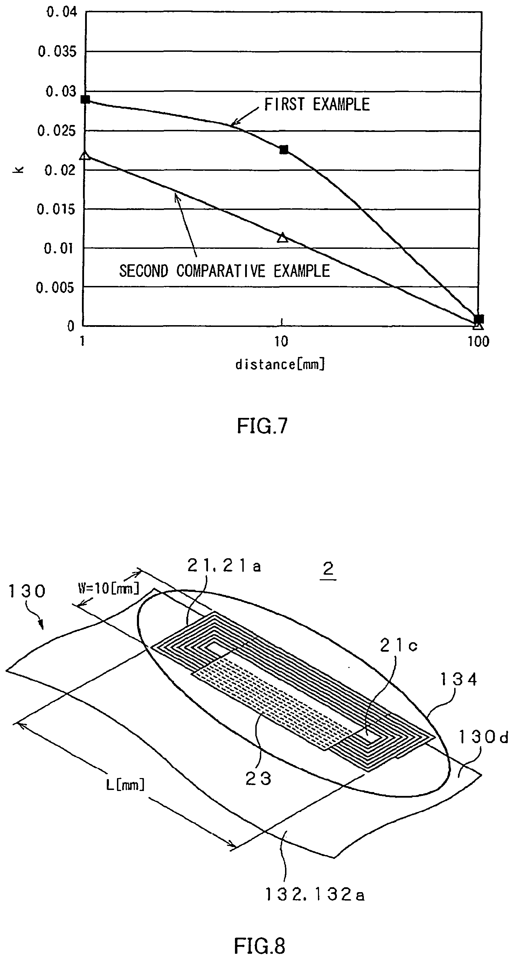

A measurement result related to communication characteristics between the communication device 1 according to the first example and the communication device 300 according to the second comparative example is shown in FIG. 7.

FIG. 7 shows coupling coefficients between a reader/writer and the communication devices 1 and 300 when a distance between a reader/writer and a mobile phone is changed.

As is apparent from the measurement results in FIGS. 5 and 7, the communication device 1 according to the first example has a coupling coefficient larger than those of the communication devices 200 and 300 according to the comparative examples. In FIGS. 5 and 7, a change in coupling coefficient of the communication device 1 is different because design conditions such as an antenna size are different from each other.

As described above, as is apparent from the measurement results in FIGS. 5 and 7, the communication device 1 according to the example has a coupling coefficient larger than those of the communication devices 200 and 300 according to the comparative examples.

As is apparent from the performance evaluation, in the communication device 1, on the center portion 132a side of the circuit board 132, the magnetic sheet 13 is arranged to be located on the reader/writer 120 side of the antenna coil 11a, and on the outer periphery 130d side of the circuit board 132, the antenna coil 11a is arranged to be located on the reader/writer 120 side. In this manner, a magnetic field generated on the outer peripheral portion 134 can be efficiently attracted by the antenna coil 11a.

The magnetic field generated on the outer peripheral portion 134 can be attracted by the antenna coil 11a as described above because the magnetic sheet 13 is arranged as described above to cause a magnetic field component from the center portion 132a of the circuit board 132 to the outer periphery 130d to efficiently pass through an opening of the antenna coil 11a.

In the communication device to which the present invention is applied, since the magnetic field generated on the outer peripheral portion can be efficiently attracted by the antenna coil, for example, as is apparent from performance evaluation obtained in comparison with the following third comparative example, good communication characteristics can be obtained without increasing an antenna coil in area. As a result, a mobile phone in which the communication device is built can be reduced in size and thickness.

As the first embodiment, a communication device 2 according to a second example, a magnetic sheet 23 is inserted into a center portion 21c of an antenna coil 21a formed on an antenna 21 such that, on the center portion 132a side of the circuit board 132, the magnetic sheet 23 is arranged to be located on the reader/writer side of the antenna coil 21a and, on the outer periphery 130d side of the circuit board 132, the antenna coil 21a is arranged to be located on the reader/writer side of the magnetic sheet 23.

The communication device 2 is regulated such that the number of turns of the antenna coil 21a is set to 8, a width W orthogonal to an outer periphery 230d is set to 10 [mm], and a length along the outer periphery 230d is set to L [mm].

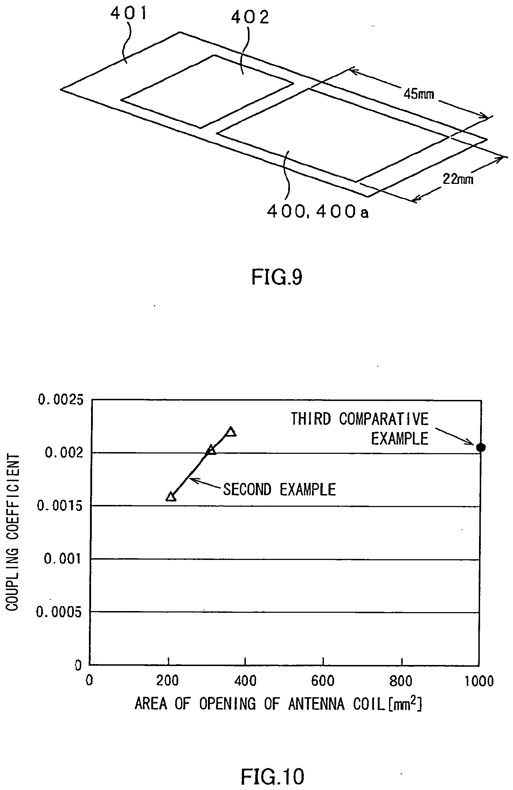

In a communication device 400 according to a third comparative example, as shown in FIG. 9, an antenna coil 400a is arranged in a region except for a magnetic sheet 402 to cover a battery pack on a circuit board of a mobile phone. The number of turns of the antenna coil 400a is set to 4, and an opening thereof has a shape having 22 [mm] high by 45 [mm] width.

A measurement result related to communication characteristics between the communication device 2 according to the second example and the communication device 400 according to the third comparative example is shown in FIG. 10.

FIG. 10 shows coupling coefficients between the reader/writer and the communication devices 2 and 400 when the area of the opening of the antenna coil 11a regulated with W x L is changed.

As is apparent from FIG. 10, the communication device 2 can obtain communication characteristics equivalent to those of the communication device 400 when the area of the antenna is about 300 [mm²] or more. More specifically, the communication device 2 can obtain the same communication characteristics as described above even though the area of the opening of the antenna coil is smaller than that in the communication device 400. In this manner, the communication device 2 is arranged on the outer peripheral portion 134 to make it possible to realize the communication characteristics equivalent to those of the communication device 400 according to the third comparative example even though the antenna coil 21a having an opening having a relatively small area. Thus, the communication device 2 can further reduce an occupied area of the mobile phone 130 on the circuit board 132 while maintaining the communication characteristics. As a result, the mobile phone 130 can be reduced in size and thickness.

In this manner, in the communication devices 1 and 2, the magnetic sheet and the antenna coil are superposed on each other to satisfy an arrangement condition in which the magnetic sheet is located on the reader/writer side of the antenna coil on the center side of the housing surface and a condition in which the antenna coil is located on the reader/writer side of the magnetic sheet on the outer periphery side of the housing surface.
When the magnetic sheet is arranged as described above, the communication devices 1 and 2 efficiently attract magnetic fluxes generated on the outer peripheral portion of the housing surface of the electronic device such as a mobile phone facing the reader/writer to the antenna coil to make it possible to reduce a space in the electronic device while maintaining the communication characteristics.
For this reason, the electronic device can be reduced in size and thickness.

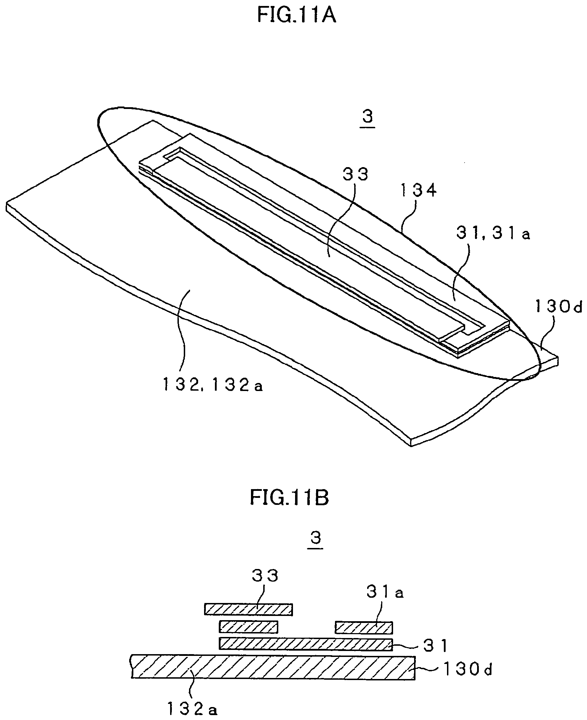

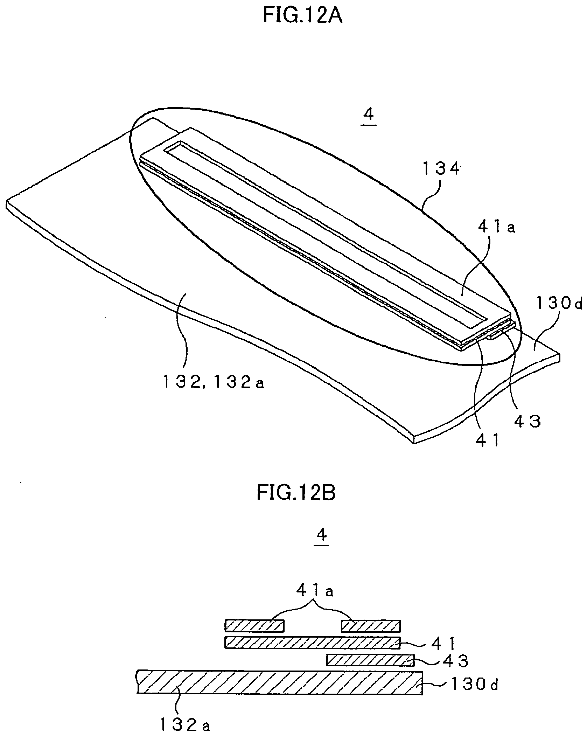

In the communication device to which the present invention is applied, even though, of the antenna coil arranged on the outer peripheral portion of the housing surface facing the reader/writer, more specifically, as shown in FIGS. 11A and 11B and FIGS. 12A and 12B, the magnetic sheet is superposed on one of the center side of the housing surface and the outer periphery side, the electronic device can be reduced in size and thickness while maintaining the communication characteristics.

As the first embodiment, a communication device 3 according to a third example, as shown in FIG. 11A, as in the communication devices 1 and 2 according to the first and second examples, is arranged on the outer peripheral portion 134 on the outer periphery 130d side on the circuit board 132. FIG. 11B is a sectional view of an antenna substrate 31 on which a magnetic sheet 33 is arranged. In the communication device 1 shown in FIGS. 11B, the number of turns of an antenna coil 31a is set to 1.

As shown in FIGS. 11B, the magnetic sheet 33 is arranged to be located on the reader/writer side of the antenna coil 31a on the center portion 132a side of the circuit board 132.

As the first embodiment, a communication device 4 according to a fourth example, as shown in FIG. 12A, as in the communication devices 1 and 2 according to the first and second examples, is arranged on the outer peripheral portion 134 on the outer periphery 130d on the circuit board 132. FIG. 12B is a sectional view of an antenna substrate 41 on which a magnetic sheet 43 is arranged. In the communication device 4 shown in FIG. 12B, the number of turns of an antenna coil 41a is set to 1.

As shown in FIG. 12B, the magnetic sheet 43 is arranged such that the antenna coil 41a is located on the reader/writer side on the outer periphery 130d of the circuit board 132.

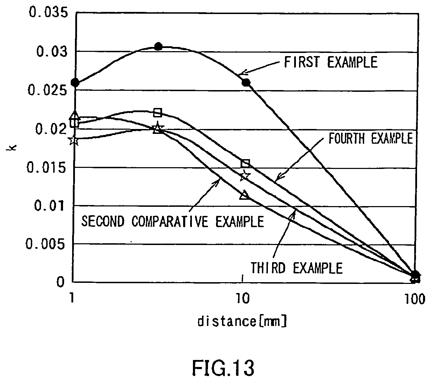

Measurement results of the communication characteristics of the communication devices 3 and 4 according to the third and fourth examples are shown in FIG. 13 with reference to the communication characteristics of the communication device 1 according to the first example and the communication device 300 according to the second comparative example. FIG. 13 shows coupling coefficients between a reader/writer and communication devices when a distance between the reader/writer and a mobile phone is changed.

As is apparent from the measurement result in FIG. 13, the communication devices 3 and 4 according to the third and fourth examples have communication characteristics poorer than those of the communication device 1 according to the first example. However, the communication devices 3 and 4 have coupling coefficients larger than that of the communication device 300 according to a comparative example.

As is apparent from the result, the communication device to which the present invention is applied satisfies at least one of an arrangement condition in which, on the center portion 132a side of the circuit board 132, the magnetic sheet 33 is located on the reader/writer side of the antenna coil 31a and an arrangement condition in which, on the outer periphery 130d side of the circuit board 132, the antenna coil 41a is located on the reader/writer side of the magnetic sheet 43 so as to cause the antenna coil to efficiently attract a magnetic field generated on the outer peripheral portion 134.

Thus, in the communication device to which the present invention is applied, of the antenna coil arranged on the outer peripheral portion of the housing surface facing the reader/writer, at least one of the center side and the outer periphery side of the housing surface and the magnetic sheet are arranged to be superposed. In this manner, the housing of the electronic device can be reduced in thickness while maintaining the communication characteristics.

### <Second Embodiment>

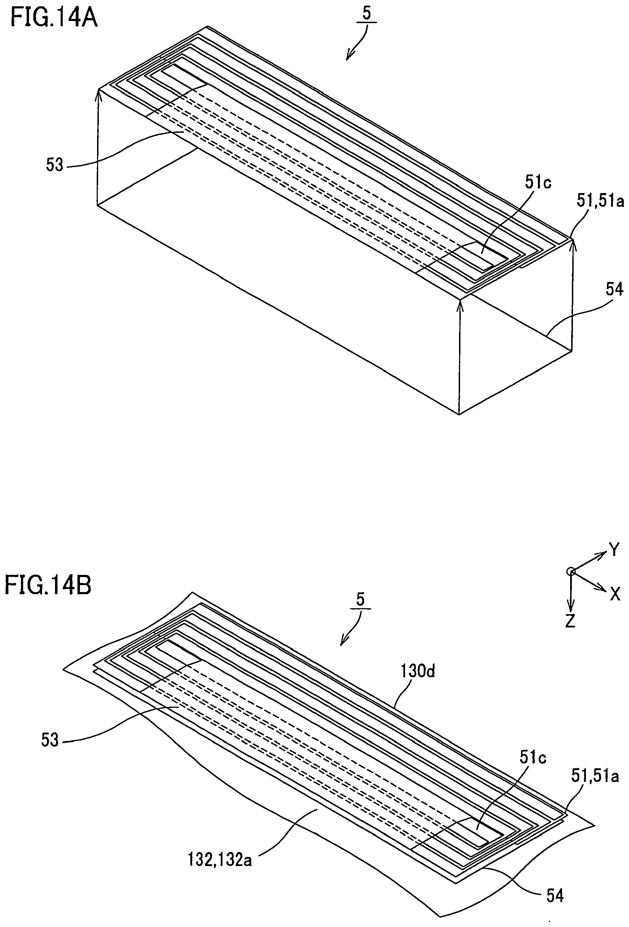

A communication device to which the present invention is applied, as a second embodiment, for example, as shown in FIGS. 14A, a conductive plate having a conductivity higher than that of a metal body constituting a housing is arranged on the housing side of the electronic device to make it possible to realize more preferable communication characteristics.

That is, a communication device 5 according to a fifth example shown in FIG. 14A, as in the first example, a magnetic sheet 53 is inserted into a center portion 51c of an antenna coil 51a formed on the antenna substrate 51.
Furthermore, the communication device 5 according to the fifth example, as shown in FIGS. 14B, includes a plate-shaped conductive plate 54 superposed on the circuit board 132 serving as a metal plate arranged inside the housing 131 to entirely cover the outer peripheral portion of the antenna coil 11a. More specifically, in the communication device 5, the conductive plate 54 is arranged to be in contact with the circuit board 132 side. The conductive plate 54 is superposed to be electrically insulated from the antenna coil 51a.

The communication device 5 according to the fifth embodiment configured as described above, as shown in FIG. 14B, on the center portion 132a side of the circuit board 132, the magnetic sheet 53 is arranged to be located on the reader/writer 120 side of the antenna coil 51a, and the magnetic sheet 53 is inserted into the center portion 51c of the antenna coil 51a formed on the antenna substrate 51 such that, on the outer periphery 130d side of the circuit board 132, the antenna coil 51a is arranged to be located on the reader/writer 120 side of the magnetic sheet 53.

In this case, as the conductive plate 54, a conductive material having a conductivity higher than that of the circuit board 132 is used. For example, in order to protect the mobile phone 130 from external force or the like, when the circuit board 132 is made of stainless steel, as the conductive plate 54, a metal member having an electric conductivity higher than that of stainless steel, for example, copper (Cu) is used as a conductive material.

In this case, when the mobile phone 130 is regarded as a whole metal body, the mobile phone 130 is considered to have an electric conductivity lower than that of copper (Cu). However, as described above, for example, since a stainless-steel plate is attached to a rear surface of a liquid display portion formed on the mobile phone 130 to protect a liquid crystal, in the example, it is assumed that the circuit board 132 almost has an electric conductivity (1 x 10⁶ s/m) that is equal to the electric conductivity of stainless steel. For this reason, in the communication device 5, the conductive plate 54 made of an electric conductivity higher than that of a metal plate arranged around the antenna coil 51a is arranged between the antenna coil 51a and the circuit board 132, as is apparent from the following performance evaluation, to make it possible to suppress the communication characteristics from being deteriorated in comparison with a configuration that does not have the conductive plate 54.

In this case, in consideration of the conductivity characteristics of the actual mobile phone 130 as a whole, an electric conductivity of the circuit board 132 may be lower than or higher than 1 x 10⁶ s/m that is an electric conductivity of a metal material corresponding to stainless steel. Thus, as the performance evaluation, communication characteristics of the communication device 5 obtained when the electric conductivity of the circuit board 132 is changed are evaluated.

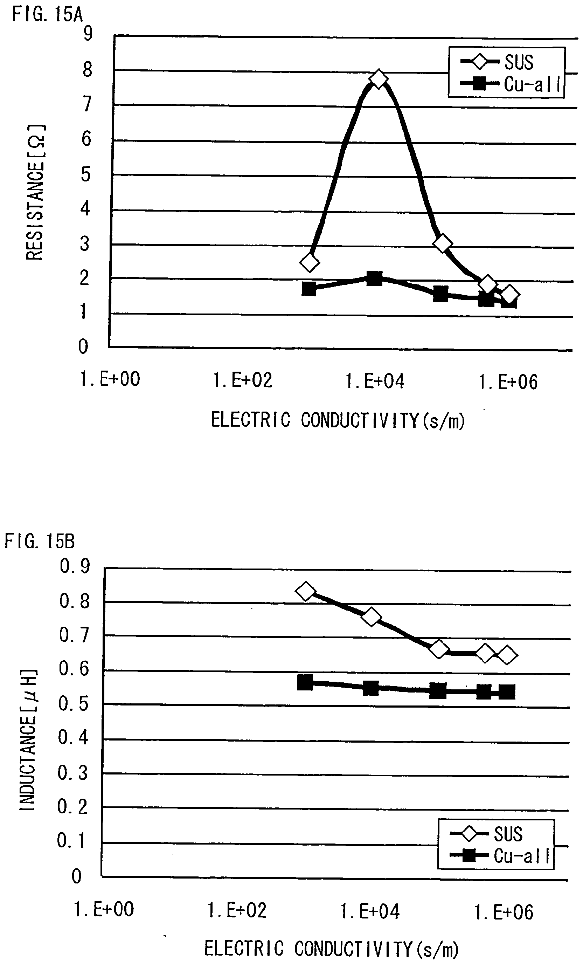

FIG. 15A is a graph in which "Cu-all" indicates a resistance of the antenna coil 51a of the communication device 5 and "SUS" indicates a resistance of an antenna coil when the antenna substrate 51 is arranged on the circuit board 132 without using the conductive plate 54.

FIG. 15B is a graph in which "Cu-all" indicates an inductance of the antenna coil 51a of the communication device 5 and "SUS" indicates an inductance of an antenna coil when the antenna substrate 51 is arranged on the circuit board 132 without using the conductive plate 54.

As is apparent from FIGS. 15A and 15B, the antenna coil related to "SUS" has a maximal resistance when the electric conductivity is 1 x 10⁴ s/m and has an inductance that increases with a decrease in electric conductivity of the stainless steel. In contrast to this, in the antenna coil 51a related to the communication device 5 indicated by "Cu-all", the resistance and the inductance rarely changed for a variation in electric conductivity.

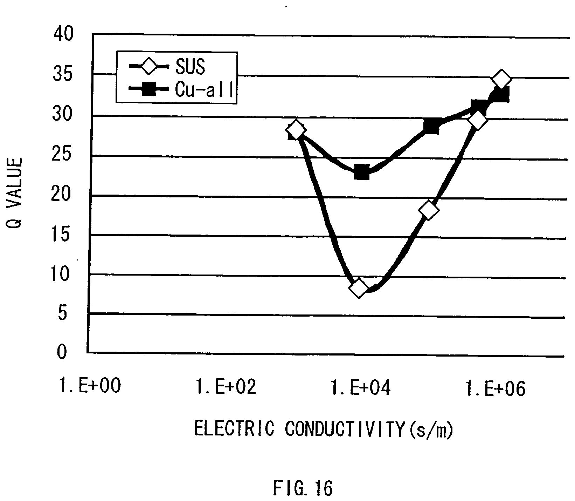

FIG. 16 is a graph in which "Cu-all" indicates a Q value of the antenna coil 51a of the communication device 5 and "SUS" indicates a Q value of an antenna coil when the antenna substrate 51 is arranged on the circuit board 132 without using the conductive plate 54.

As is apparent from FIG. 16, in the communication device 5, when the conductive plate 54 is arranged between the circuit board 132 and the antenna substrate 51, in comparison with the case in which the conductive plate 54 is not arranged, the Q value is large and slightly changes.
As is apparent from the result, the communication device 5 can be stably operated while maintaining preferable communication characteristics.

In this manner, a stable operation can be performed while maintaining preferable communication characteristics because, although eddy currents are generated in the circuit board 132 and the conductive plate 54 depending on a current flowing in the antenna coil, the antenna coil 11a is entirely covered against the circuit board 132 by the conductive plate 54 made of copper (Cu) having an electric conductivity higher than that of a stainless-steel plate to make it possible to suppress thermal energy consumed by the eddy current generated by the circuit board 132.

Furthermore, the communication device 5 is required to be designed such that, as is apparent from the performance evaluation using communication devices according to the following fourth and fifth comparative examples, the conductive plate 54 is superposed to cover at least an entire area of the antenna coil 51a.

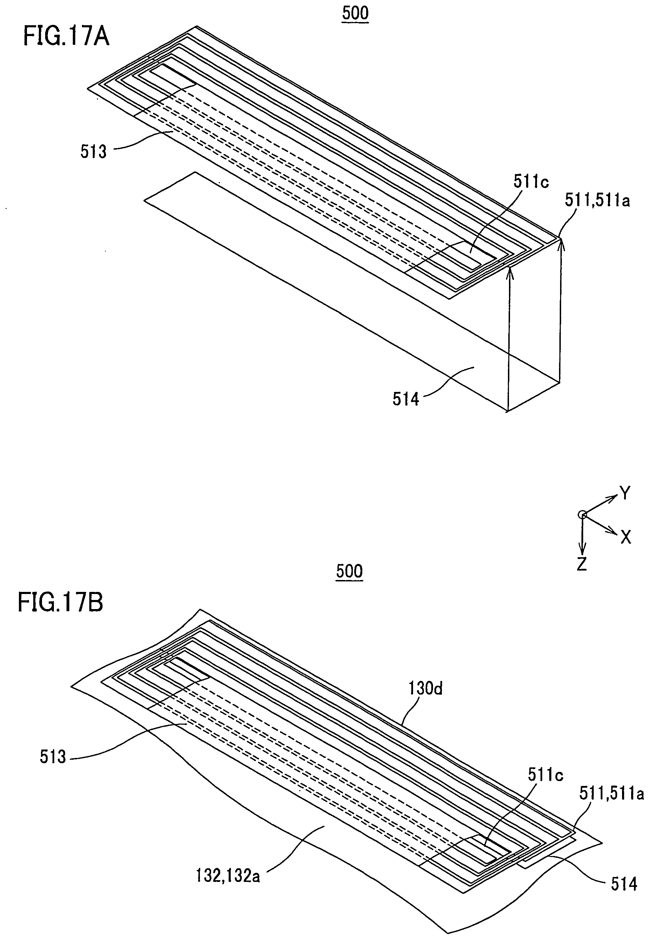

FIGS. 17A and 17B are diagrams showing a communication device 500 according to a fourth comparative example. In the communication device 500, as shown in FIGS. 17A, as in the fifth example, a magnetic sheet 513 is inserted into a center portion 511c of an antenna coil 511a formed on an antenna substrate 511. The communication device 500 is different from the communication device 5 according to the fifth example in that, on the antenna substrate 511, a conductive plate 514 is superposed on only a region in which the antenna coil 511a is located on the reader/writer 120 side of the magnetic sheet 513. More specifically, in the communication device 500 according to the fourth comparative example, the area of the conductive plate 514 is half the area of the conductive plate 54 of the communication device 5 according to the fifth example.

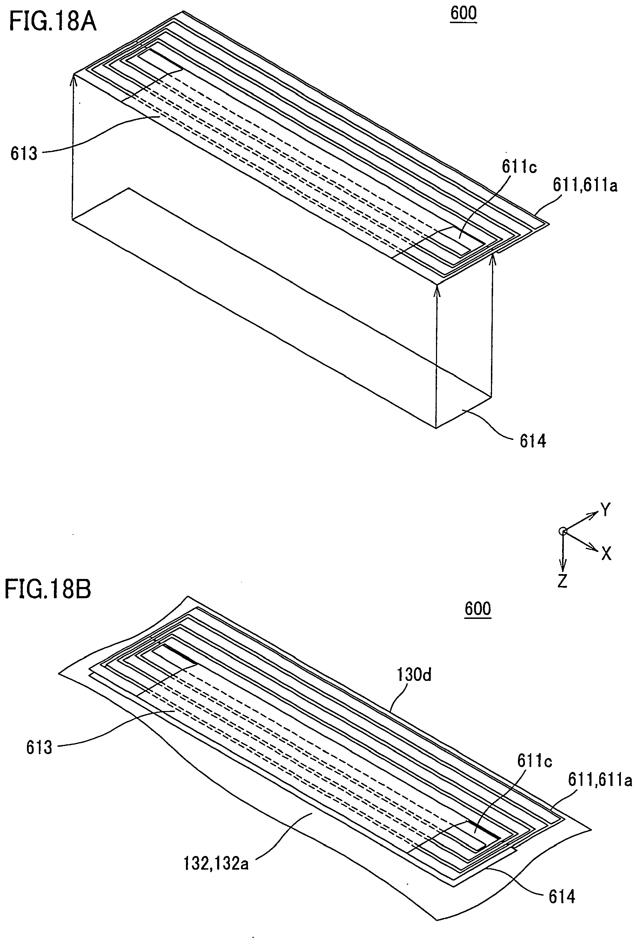

FIGS. 18A and 18B are diagrams showing a communication device 600 according to a fifth comparative example. In the communication device 600, as shown in FIGS. 18A, as in the fifth example, a magnetic sheet 613 is inserted into a center portion 611c of an antenna coil 611a formed on an antenna substrate 611. The communication device 600 is different from the communication device 5 according to the fifth example in that, on the antenna substrate 611, a conductive plate 614 is superposed on only a region in which the magnetic sheet 613 is located on the reader/writer 120 side of the antenna coil 611a. More specifically, in the communication device 600 according to the fifth comparative example, the area of the conductive plate 614 is half the area of the conductive plate 54 of the communication device 5 according to the fifth example.

Communication characteristics obtained when the electric conductivity of the circuit board 132 is changed are evaluated.

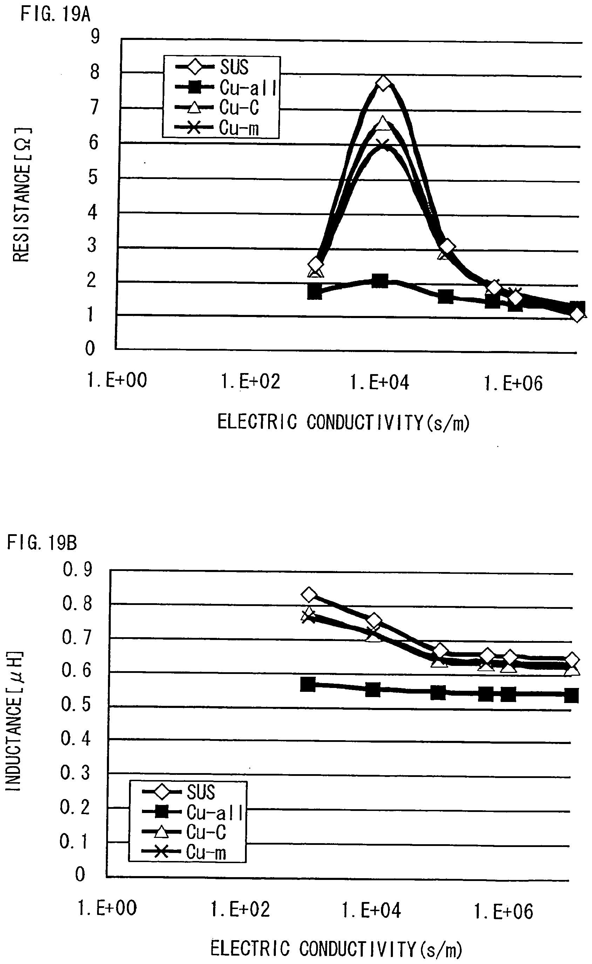

FIG. 19A, as in FIG. 15A, shows resistances related to "Cu-all" and "SUS", and is a graph in which "Cu-C" indicates a resistance of the antenna coil 511a according the fourth comparative example and "Cu-m" indicates a resistance of the antenna coil 611a according to the fifth comparative example.

FIG. 19B, as in FIG. 15B, shows inductances of antenna coils related to "Cu-all" and "SUS", and is a graph in which "Cu-C" indicates an inductance of the antenna coil 511a according to the fourth comparative example and "Cu-m" indicates an inductance of the antenna coil 611a according to the fifth comparative example.

As is apparent from FIGS. 19A and 19B, a conductive plate, in the fourth and fifth comparative examples in each of which the conductive plate is not superposed on the circuit board 132 to entirely cover the outer peripheral portion of the antenna coil, unlike in the fifth example, the resistance of the antenna coil cannot be suppressed.
In the fourth and fifth comparative examples, unlike in the fifth example, the resistance and the inductance of the antenna coil largely change depending on a change in electric conductivity of stainless steel.

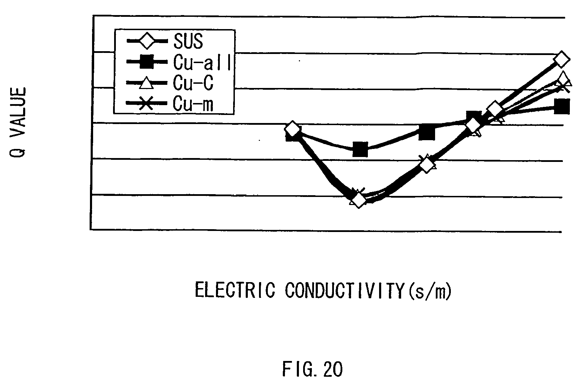

FIG. 20, as in FIG. 16, shows Q values of the antenna coils related to "Cu-all" and "SUS" and is a graph in which "Cu-C" indicates a Q value of the antenna coil 511a according to the fourth comparative example and "Cu-m" indicates a Q value of the antenna coil 611a according to the fifth comparative example.

As is apparent from FIG. 20, in the fourth and fifth comparative examples, in comparison with the fifth example, the Q values are small values that are almost equal to that in the case a conductive plate is not arranged, and preferable communication characteristics cannot be realized.

As is apparent from the results in FIGS. 19A, 19B, and 20, in the communication device 5 according to the fifth embodiment, since the conductive plate 54 is superposed on the circuit board 132 to cover at least an entire surface of the antenna coil 51a, preferable communication characteristics can be realized.

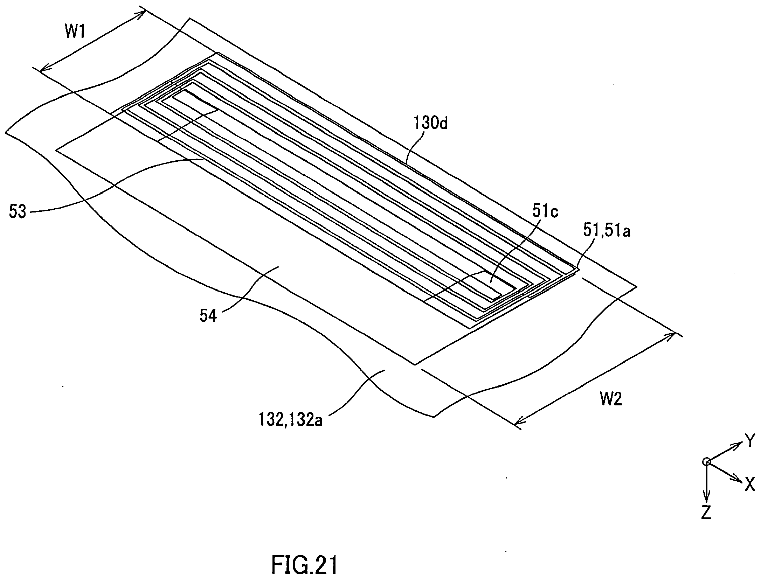

In terms of a reduction in size, the communication device 5 is especially preferably designed such that a circumference of the conductive plate 54 is equal to a circumference of the antenna coil 51a. However, as shown in FIG. 21, a width W2 of the conductive plate 54 is set to be larger than a width W1 of the antenna coil 51a regulated in a y-axis direction to make it possible to realize more preferable communication characteristics.

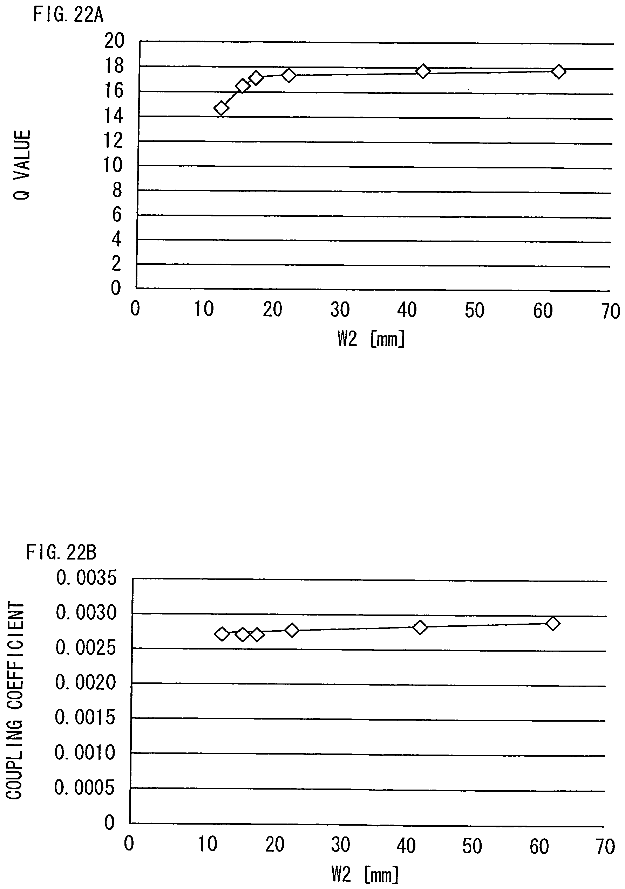

As a concrete example, Q values and coupling coefficients of the antenna coil 51a obtained when the width W2 of the conductive plate 54 that entirely covers the antenna coil 51a is changed from 12 mm to 60 mm in a state the width W1 of the antenna coil 51a is fixed to 12 mm are shown in FIGS. 22A and 22B.

As is apparent from FIGS. 22A and 22B, when the width W1 of the antenna coil 51a is set to 12 mm, the Q value sharply increases when the width W2 falls within the range of 12 mm to 22 mm. Even though the width W2 is set to be larger than 22 mm, the Q value converges to about 18.

Thus, in the communication device 5, when the width W2 of the conductive plate 54 is selected within the range of 1 to 1.2 with respect to the width W1 of the antenna coil 51a, preferable communication characteristics can be realized without spoiling a reduction in size as much as possible.

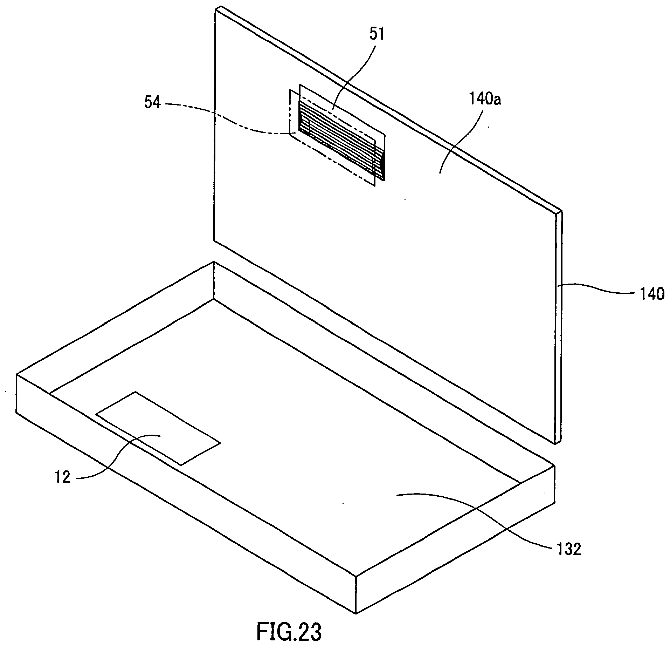

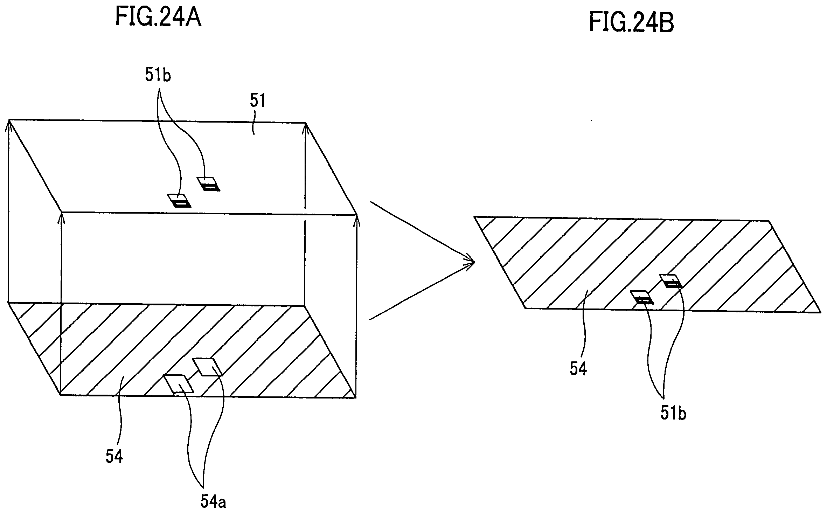

In the mobile phone 130, as shown in FIG. 23, a storing lid 140 is arranged to face the circuit board 132.
When the antenna substrate 51 of the communication device 5 is mounted on a surface 140a facing the circuit board 132 of the storing lid 140, in terms of easily electrical connection between the antenna coil 51a and the communication processing unit 12 arranged in the circuit board 132 in a limited space, a terminal unit 51b is formed on the antenna substrate 51 as shown in FIGS. 24A and 24B, and the conductive plate 54 is preferably arranged between the antenna substrate 51 and the circuit board 132.

FIGS. 24A and 24B are diagrams showing a configuration of the antenna substrate 51 mounted on the surface 140a of the storing lid 140. More specifically, as shown in FIGS. 24A, the terminal unit 51b is formed on the antenna substrate 51. In the conductive plate 54 superposed on the antenna substrate 51, an opening 54a is formed at a position matched with the terminal unit 51b in a direction of thickness.

As shown in FIG. 24B, the conductive plate 54 is superposed on the antenna substrate 51 to make it possible to electrically connect the terminal unit 51b from the circuit board 132 side in the communication device 5. As a result, the antenna coil 51a and the communication processing unit 12 can be easily electrically connected to each other by using effectively use a space.

### <Third Embodiment>

As the third embodiment, a communication device according to a sixth example to which the present invention is applied employs a structure in which an antenna coil and a magnetic sheet are superposed on each other to have almost the same plane on both the surfaces on a reader/writer side and a substrate side so as to realize a small thickness and preferable communication characteristics.

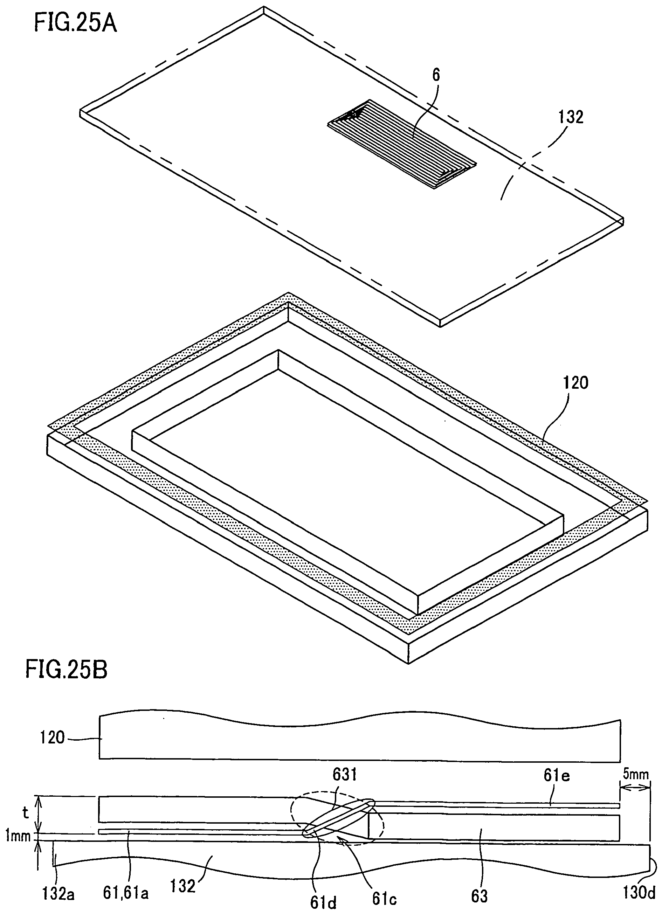

FIG. 25A is a diagram showing a positional relationship between a communication device 6 according to the sixth example and the reader/writer 120, and FIG. 25B is a sectional view of an antenna substrate 61 according to the communication device 6 according to the sixth example.

More specifically, the communication device 6, as shown in FIG. 25B, at a center portion 61c where a magnetic sheet 63 is inserted into a center portion of a antenna coil 61a formed on the antenna substrate 61, a step portion 61d is formed on the antenna substrate 61. In the communication device 6, a step portion 631 is formed on the magnetic sheet 63 at the center portion 61c. In the communication device 6, the step portions 61d and 631 are formed, and the magnetic sheet 63 and the antenna substrate 61 are superposed on each other to form a uniform surface extending from the center side of the housing 131 to the outer periphery side, that is, the center portion 132a of the circuit board 132 to the outer periphery 130d in the state in which the magnetic sheet 63 is inserted into the antenna substrate 61.

In this manner, in the communication device 6, since the magnetic sheet 63 and the antenna substrate 61 are on the same plane from the center side of the housing 131 to the outer periphery side in the state in which the magnetic sheet 63 is inserted into the antenna substrate 61, preferable communication characteristics can be realized while promoting a reduction in thickness. More specifically, in the communication device 6, since the magnetic sheet 63 can be increased in thickness as much as possible while promoting a reduction in thickness, preferable communication can be realized as a result.

In this case, evaluation conditions were set as follows. More specifically, as the antenna of the reader/writer 120, a 2-turn coil having dimensions of 66 mm x 100 mm was used. As the circuit board 132, a stainless steel plate having 100 mm x 50 mm x 1.0 mm thickness was used. As the antenna substrate 61, a structure in which the magnetic sheet 63 is penetrated through the center portion 61c where an aperture of the 4-turn spiral antenna coil 61a having dimensions of 30 mm x 12 mm is located was used. A distance from the surface of the circuit board 132 to the surface of the antenna substrate 61 was set to 1 mm. The antenna substrate 61, as shown in FIG. 25B, a distance from the outer periphery 130d serving as an end portion of the circuit board 132 regulated in a direction of width to an end portion 61e of the antenna substrate 61 was set to 5 mm.

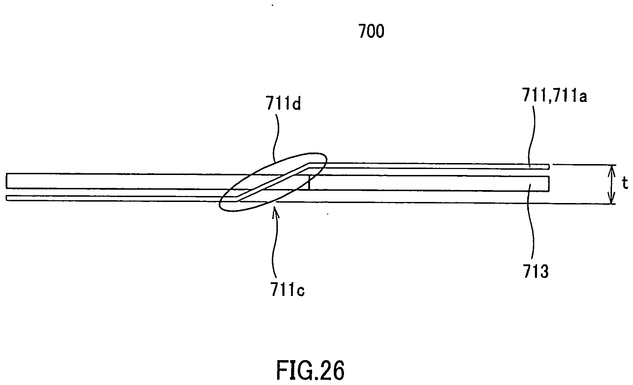

It is assumed that, as an object to be compared, a communication device 700 having a structure shown in FIG. 26 is used. The communication device 700 has an antenna substrate 711 on which an antenna coil 711a is formed and which has a step portion 711d formed at a center portion 711c, and a sheet-like magnetic sheet 713 both the surfaces of which are horizontal. The magnetic sheet 713 is inserted into the center portion 711c of the antenna substrate 711. As an object to be compared, the communication device 700 is used, and the same evaluation conditions as those in the communication device 6 are set.

In the communication device 6 or 700, a total thickness of the antenna substrate and the magnetic sheet as shown in FIGS. 25A, 25B, and 26 was set to t [mm]. The antenna coil was configured by a flexible printed circuit board, and the thickness of the antenna substrate was fixed to 0.1 mm.

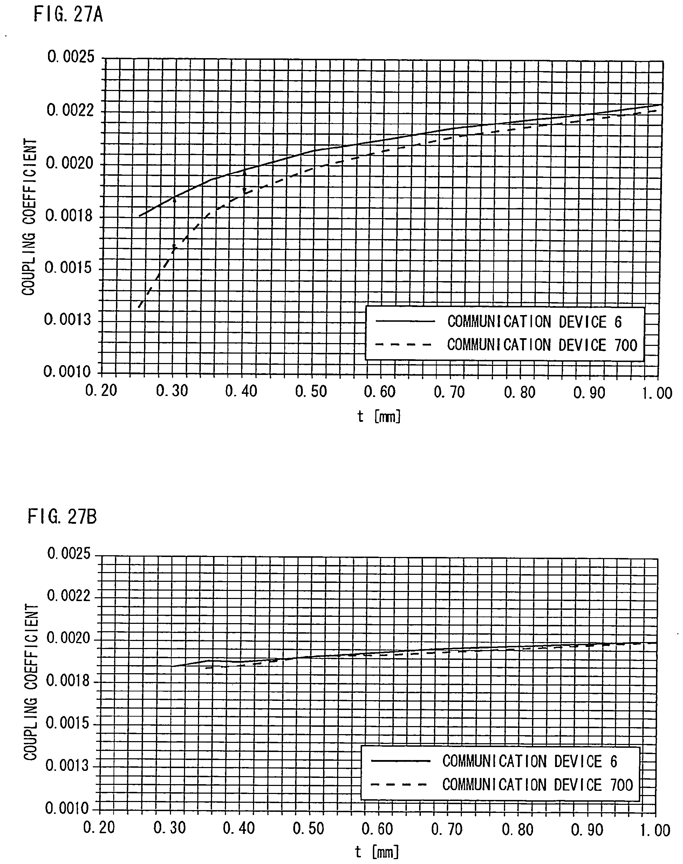

FIGS. 27A and 27B are graphs showing coupling coefficients of the antenna coils 61a and 711a of the communication device 6 according to the sixth example and the communication device 700 when the total thickness of the antenna substrate and the magnetic sheet is changed.
In this case, in FIG. 27A, a conductor thickness of the antenna coil wire is fixed to 0.035 mm, and only the thickness of the magnetic sheet is changed. In FIG. 27B, the thickness of the magnetic sheet is fixed to 0.2 mm, and only the thickness of the conductor thickness of the antenna coil wire is changed. Furthermore, the coupling coefficient of the antenna coil 61a is indicated by a solid line, and the coupling coefficient of the antenna coil 711a is indicated by a broken line.

As is apparent from the result in FIG. 27A, in the communication device 6, when only the thickness of the magnetic sheet is changed, a coupling coefficient that is higher than that of the communication device 700 by 15.5% when the total thickness of the antenna substrate and the magnetic sheet is 0.3 mm, and a coupling coefficient that is higher than that of the communication device 700 by 6.5% when the total thickness is 0.4 mm, so that preferable characteristics can be realized. As is apparent from the result in FIG. 27B, a coupling coefficient of the communication device 6 is not changed in comparison with the communication device 700 even though the thickness of the antenna substrate is changed.

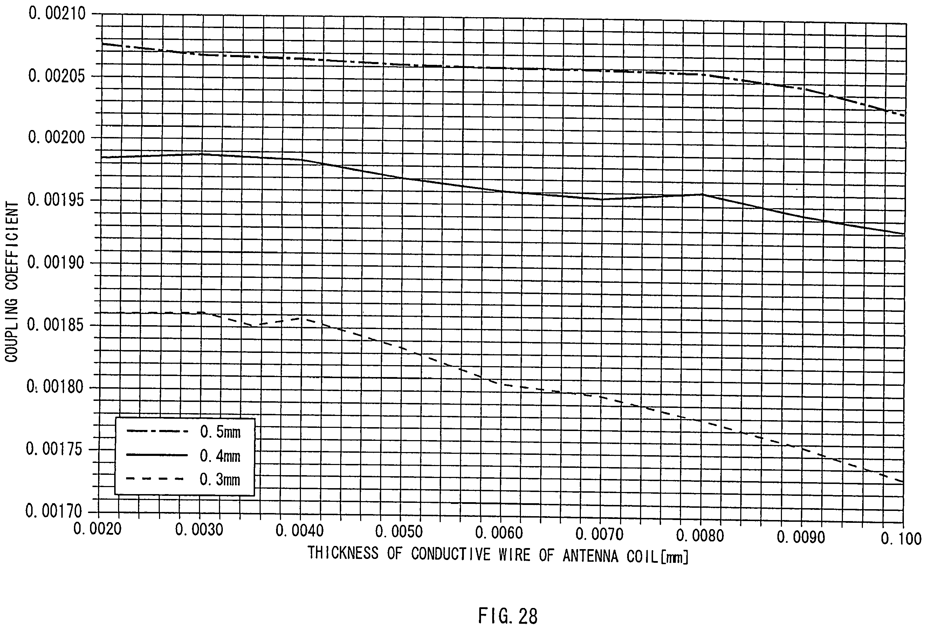

As performance evaluation of the communication device 6, in concrete examples of three types in which total thicknesses of the antenna substrates and the magnetic sheets are set to 0.3 mm, 0.4 mm, and 0.5 mm, coupling coefficients and Q values and products between the coupling coefficients and the Q values obtained when the conductor thickness of the antenna coil 61a is changed are shown in FIGS. 28, 29, and 30, respectively.

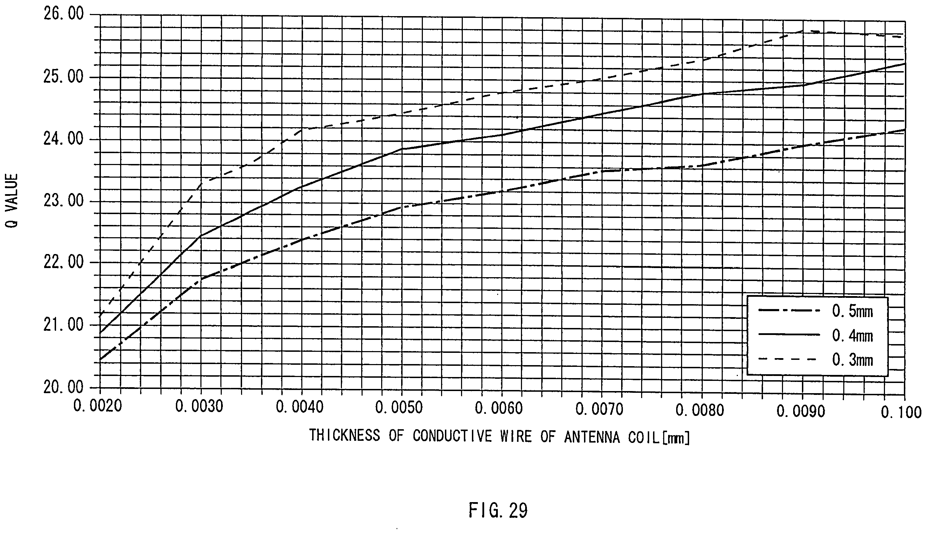

In this case, as is apparent from the result in FIG. 28, a coupling coefficient increases when the conductor thickness of the antenna coil 61a is reduced, in other words, the magnetic sheet 63 is increased in thickness. In contrast to this, as is apparent from the result in FIG. 29, when the conductor thickness of the antenna coil 61a is increased in thickness, the Q value increases.

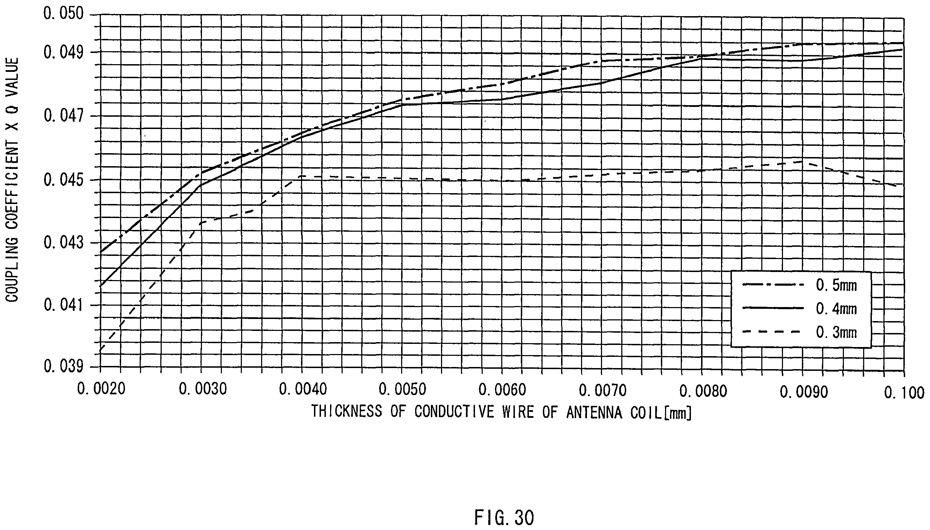

As is apparent from the result in FIG. 30, when the total thickness is 0.3 mm, the conductor thickness of the antenna coil 61a is 40 µm or more, and communication characteristics are almost constant. In contrast to this, in FIG. 30, when the total thicknesses are 0.4 mm and 0.5 mm, the communication characteristics are improved when the conductor thickness of the antenna coil 61a is increased.

As is apparent from the results in FIGS. 28 to 30, in the communication device 6, when a reduction in thickness, for example, a total thickness of 0.3 mm, is strongly demanded, it is preferable in terms of communication characteristics that the thickness of the magnetic sheet is increased as much as possible in a condition in which a predetermined conductor thickness or more of the antenna coil is secured. This is because, since a high-frequency signal having a frequency of 13.56 MHz causes a current to flow in the surface of the antenna coil with a skin effect, the thickness of the magnetic sheet is increased as much as possible by securing the predetermined conductor thickness or more to make it possible to improve the communication characteristics.

In this manner, the communication device 6 according to the fifth example employs a structure in which the magnetic sheet 63 and the antenna substrate 61 form a uniform surface extending from the center side of the housing 131 to the outer periphery side such that the magnetic sheet 63 is inserted into the antenna substrate 61 so as to make it possible to realize a reduction in thickness and preferable communication characteristics.

### <Modification>

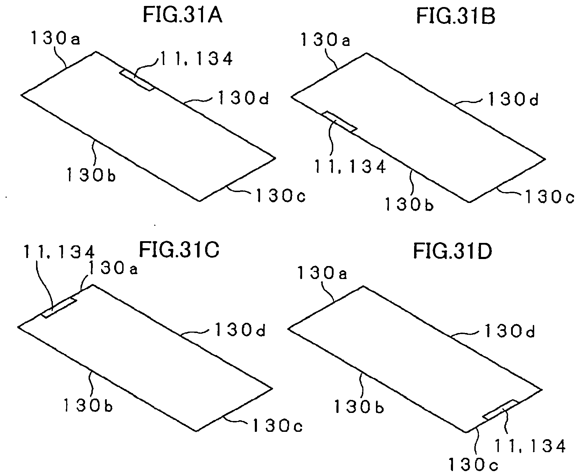

In the communication devices to which the present invention is applied, as shown in FIG. 31A, the antenna substrates 11, 21, 31, 41, 51, and 61 may be arranged on not only the outer peripheral portion 134 on the outer periphery 130d side of the outer peripheries 130a, 130b, 130c, and 130d but also, for example, as shown in FIG. 31B, the outer peripheral portion 134 on the outer periphery 130b side, as shown in FIG. 31C, the outer peripheral portion 134 on the outer periphery 130a side, or, as shown in FIG. 31D, the outer peripheral portion 134 on the outer periphery 130c side.

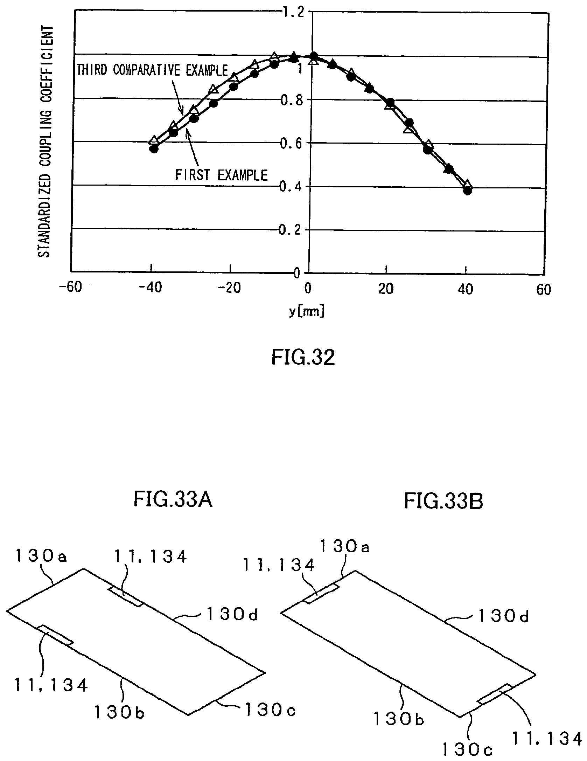

When the antenna substrate 11 is arranged on the outer peripheral portion 134 on an arbitrary outer periphery side of the outer peripheries 130a, 130b, 130c, and 130d, as a concrete example, communication sensitivity obtained when relative positions a mobile phone in which the communication device 1 according to the first example is built and a reader/writer are changed is evaluated with reference to FIG. 32.

It is assumed that, with reference to the position of the reader/writer, a coupling coefficient between the communication device 1 and the reader/writer 120 when the position of the mobile phone 130 in which the antenna substrate 11 of the communication device 1 according to the first embodiment is mounted is moved in a y-axis direction is measured to make a performance evaluation.
An interval between the reader/writer 120 and the mobile phone 130, i.e., a separation distance in a z-axis direction is set to 50 [mm]. As a comparative example, a coupling coefficient between the communication device 400 and the reader/writer obtained when a mobile phone in which the communication device 400 according to the third comparative example is built is moved in a y-axis direction with reference to the position of the reader/writer is measured.

A measurement result of the coupling coefficient obtained at this time is shown in FIGS. 32. In the communication device 1, although the antenna substrate 11 is arranged on only the outer periphery 130d side of the mobile phone 130, even though the mobile phone 130 is shifted in the y-axis direction, the communication characteristics of the communication device 400 according to the third comparative example slightly change. As is apparent from the performance evaluation, the communication device to which the present invention is applied can be designed to have preferable communication characteristics, even though one antenna substrate 11 is arranged on the outer peripheral portion 134 on an arbitrary outer periphery side of the outer peripheries 130a, 130b, 130c, and 130d, regardless of a relative positional relationship between the mobile phone and the reader/writer.

In the communication device to which the present invention is applied, as described above, since the area of the antenna coil can be reduced, a plurality of antenna substrates 11 may be arranged. For example, as shown in FIG. 33A, the antenna substrates 11 may be arranged on the outer peripheral portions 134 on the outer periphery 130b side and the outer periphery 130d side, and, as shown in FIG. 33B, the antenna substrates 11 may be arranged on the outer peripheral portions 134 on the outer periphery 130a side and the outer periphery 130c side, thereby the antenna coils of the antenna substrates 11 and the communication processing unit may be electrically connected to each other.

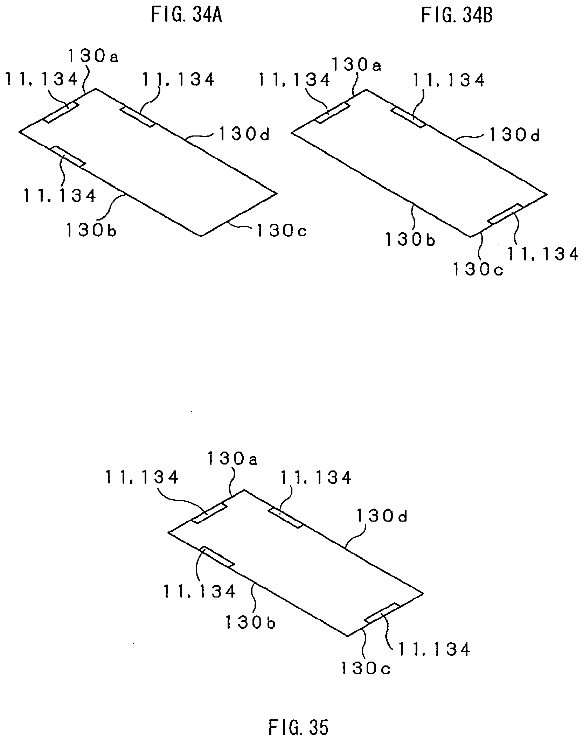

In the communication apparatus to which the present invention is applied, for example, as shown in FIGS. 34A, the antenna substrates 11 may be arranged on the outer peripheral portions 134 on the outer periphery 130a side, the outer periphery 130b side, and the outer periphery 130d side, or, as shown in FIG. 34B, the antenna substrates 11 may be arranged on the outer peripheral portions 134 on the outer periphery 130a side, the outer periphery 130c side, and the outer periphery 130d side, thereby the antenna coils of the antenna substrates 11 may be electrically connected to each other.

In the communication device to which the present invention is applied, for example, as shown in FIG. 35, the antenna substrates 11 may be arranged on the outer peripheral portions 134 on the outer periphery 130a side, the outer periphery 130b side, the outer periphery 130c side, and the outer periphery 130d side, and the antenna coils of the antenna substrates 11 and the communication processing unit may be electrically connected to each other.

## Claims

1. An electronic device (130), comprising:
a housing (131) comprising a housing surface; and
an antenna device (1) configured to perform communication by receiving a magnetic field transmitted from a transmitter (120), wherein
the antenna device (1) comprises:
an antenna coil (11a) arranged in a peripheral portion (130d) of the housing surface such that windings of the antenna coil (11a) are parallel to the housing surface, the antenna coil (11a) being configured to be inductively coupled to the transmitter (120); and
a magnetic sheet (13) configured to attract a magnetic field transmitted from the transmitter (120) to the antenna coil (11a), wherein
a first region of the antenna coil (11a) is located closer to a central portion of the housing surface than a second region of the antenna coil (11a); and
the magnetic sheet (13) is arranged between the first region of the antenna coil (11a) and the housing surface, but not between the second region of the antenna coil (11a) and the housing surface, or
the second region of the antenna coil (11a) is arranged between the magnetic sheet (13) and the housing surface, but the first region of the antenna coil (11a) is not arranged between the magnetic sheet (13) and the housing surface.

2. The electronic device (130) according to claim 1, wherein the antenna coil (11a) is formed by using a signal line on a printed circuit board.

3. The electronic device (130) according to claim 1 or 2, wherein, the magnetic sheet (13) is arranged between the first region of the antenna coil (11a) and the housing surface, and
the second region of the antenna coil (11a) is arranged between the magnetic sheet (13) and the housing surface.

4. The electronic device (130) according to claim 3, wherein
the antenna device (1) is arranged between a metal plate (132) arranged in the housing (131) and the housing surface, and
step portions are formed in the antenna coil (11a) and the magnetic sheet (13) at a position where the magnetic sheet (13) is inserted into a center portion of the antenna coil (11a), and the antenna coil (11a) and the magnetic sheet (13) are superposed on each other to form a uniform surface from the central portion of the housing surface to the periphery portion in the inserted state.

5. The electronic device (130) according to claim 1, wherein
the antenna device (1) is arranged between a metal plate (132) arranged in the housing (131) and the housing surface, and
the antenna device (1) includes a plate-shaped conductor plate (54) that is made of a conductive material having a conductivity higher than the metal plate (132) and arranged between the metal plate (132) and the antenna coil (11a) to cover at least an entire surface of the antenna coil (11a) while being insulated from the antenna coil (11a).

6. The electronic device (130) according to any one of the preceding claims, further comprising:
a communication processing unit (12) that is configured to be driven by a current flowing in the antenna coil (11a) and to perform communication with the transmitter (120).

7. The electronic device (130) according to claim 6, wherein
a plurality of antenna coils (11a) as defined in claim 1 are arranged in the peripheral portion of the housing surface, and
the communication processing unit (12) is configured to be driven by a current flowing in the plurality of antenna coils (11a) arranged in the outer peripheral portion of the housing surface.

8. The electronic device (130) according to claim 6, wherein the electronic device (130) is a mobile electronic device.

## Patentansprüche

1. Elektronische Vorrichtung (130), umfassend:
ein Gehäuse (131) mit einer Gehäuseoberfläche; und
eine Antennenvorrichtung (1), die dafür konfiguriert ist, eine Kommunikation durchzuführen, indem ein von einem Sender (120) gesendetes Magnetfeld empfangen wird, wobei
die Antennenvorrichtung (1) umfasst:
eine Antennenspule (11a), die in einem Umfangsteil (130d) der Gehäuseoberfläche so angeordnet ist, dass Wicklungen der Antennenspule (11a) zur Gehäuseoberfläche parallel sind, wobei die Antennenspule (11a) dafür konfiguriert ist, mit dem Sender (120) induktiv gekoppelt zu werden; und
eine magnetische Folie (13), die dafür konfiguriert ist, ein vom Sender (120) zur Antennenspule (11a) gesendetes Magnetfeld anzuziehen, wobei
ein erster Bereich der Antennenspule (11a) näher zu einem zentralen Teil der Gehäuseoberfläche als ein zweiter Bereich der Antennenspule (11a) gelegen ist; und
die magnetische Folie (13) zwischen dem ersten Bereich der Antennenspule (11a) und der Gehäuseoberfläche, nicht aber zwischen dem zweiten Bereich der Antennenspule (11a) und der Gehäuseoberfläche angeordnet ist, oder
der zweite Bereich der Antennenspule (11a) zwischen der magnetischen Folie (13) und der Gehäuseoberfläche angeordnet ist, aber der erste Bereich der Antennenspule (11a) nicht zwischen der magnetischen Folie (13) und der Gehäuseoberfläche angeordnet ist.

2. Elektronische Vorrichtung (130) nach Anspruch 1,
wobei die Antennenspule (11a) unter Ausnutzung einer Signalleitung auf einer Leiterplatte ausgebildet ist.

3. Elektronische Vorrichtung (130) nach Anspruch 1 oder 2, wobei die magnetische Folie (13) zwischen dem ersten Bereich der Antennenspule (11a) und der Gehäuseoberfläche angeordnet ist, und
der zweite Bereich der Antennenspule (11a) zwischen der magnetischen Folie (13) und der Gehäuseoberfläche angeordnet ist.

4. Elektronische Vorrichtung (130) nach Anspruch 3,
wobei die Antennenvorrichtung (1) zwischen einer im Gehäuse (131) angeordneten Metallplatte (132) und der Gehäuseoberfläche angeordnet ist, und
Stufenteile in der Antennenspule (11a) und der magnetischen Folie (13) an einer Position ausgebildet sind, wo die magnetische Folie (13) in einen zentralen Teil der Antennenspule (11a) eingesetzt ist, und die Antennenspule (11a) und die magnetische Folie (13) einander überlagert sind, um im eingesetzten Zustand eine gleichmäßige Oberfläche vom zentralen Teil der Gehäuseoberfläche zum Umfangsteil zu bilden.

5. Elektronische Vorrichtung (130) nach Anspruch 1, wobei
die Antennenvorrichtung (1) zwischen einer im Gehäuse (131) angeordneten Metallplatte (132) und der Gehäuseoberfläche angeordnet ist, und
die Antennenvorrichtung (1) eine plattenförmige Leiterplatte (54) enthält, die aus einem leitfähigen Material mit einer höheren Leitfähigkeit als die Metallplatte (132) besteht und zwischen der Metallplatte (132) und der Antennenspule (11a) angeordnet ist, um zumindest eine ganze Oberfläche der Antennenspule (11a) zu bedecken, während sie von der Antennenspule (11a) isoliert ist.

6. Elektronische Vorrichtung (130) nach einem der vorhergehenden Ansprüche, ferner umfassend:
eine Kommunikationsverarbeitungseinheit (12), die dafür konfiguriert ist, durch einen in der Antennenspule (11a) fließenden Strom angetrieben zu werden und eine Kommunikation mit dem Sender (120) durchzuführen.

7. Elektronische Vorrichtung (130) nach Anspruch 6, wobei
eine Vielzahl von Antennenspulen (11a) wie in Anspruch 1 definiert im Umfangsteil der Gehäuseoberfläche angeordnet ist, und
die Kommunikationsverarbeitungseinheit (12) dafür konfiguriert ist, durch einen Strom angetrieben zu werden, der in der Vielzahl von Antennenspulen (11a) fließt, die im äußeren Umfangsteil der Gehäuseoberfläche angeordnet sind.

8. Elektronische Vorrichtung (130) nach Anspruch 6,
wobei die elektronische Vorrichtung (130) eine mobile elektronische Vorrichtung ist.

## Revendications

1. Dispositif électronique (130), comprenant :
un boîtier (131) comprenant une surface de boîtier ; et
un dispositif d'antenne (1) configuré pour exécuter une communication en recevant un champ magnétique émis d'un émetteur (120), dans lequel
le dispositif d'antenne (1) comprend :
une bobine d'antenne (11a) agencée dans une portion de périphérie (130d) de la surface de boîtier de sorte que des enroulements de la bobine d'antenne (11a) soient parallèles à la surface de boîtier, la bobine d'antenne (11a) étant configurée pour être couplée par induction à l'émetteur (120) ; et
une feuille magnétique (13) configurée pour attirer un champ magnétique émis de l'émetteur (120) vers la bobine d'antenne (11a), dans lequel
une première région de la bobine d'antenne (11a) est située plus proche d'une portion centrale de la surface de boîtier qu'une seconde région de la bobine d'antenne (11a) ; et
la feuille magnétique (13) est agencée entre la première région de la bobine d'antenne (11a) et la surface de boîtier, mais pas entre la seconde région de la bobine d'antenne (11a) et la surface de boîtier, ou
la seconde région de la bobine d'antenne (11a) est agencée entre la feuille magnétique (13) et la surface de boîtier, mais la première région de la bobine d'antenne (11a) n'est pas agencée entre la feuille magnétique (13) et la surface de boîtier.

2. Dispositif électronique (130) selon la revendication 1, dans lequel la bobine d'antenne (11a) est formée en utilisant une ligne de signal sur une carte de circuit imprimé.

3. Dispositif électronique (130) selon la revendication 1 ou 2, dans lequel, la feuille magnétique (13) est agencée entre la première région de la bobine d'antenne (11a) et la surface de boîtier, et
la seconde région de la bobine d'antenne (11a) est agencée entre la feuille magnétique (13) et la surface de boîtier.

4. Dispositif électronique (130) selon la revendication 3, dans lequel
le dispositif d'antenne (1) est agencé entre une plaque métallique (132) agencée dans le boîtier (131) et la surface de boîtier, et
des portions étagées sont formées dans la bobine d'antenne (11a) et la feuille magnétique (13) en une position à laquelle la feuille magnétique (13) est insérée dans une portion centrale de la bobine d'antenne (11a), et la bobine d'antenne (11a) et la feuille magnétique (13) sont superposées l'une sur l'autre pour former une surface uniforme depuis la portion centrale de la surface de boîtier jusqu'à la portion de périphérie dans l'état inséré.

5. Dispositif électronique (130) selon la revendication 1, dans lequel
le dispositif d'antenne (1) est agencé entre une plaque métallique (132) agencée dans le boîtier (131) et la surface de boîtier, et
le dispositif d'antenne (1) inclut une plaque conductrice en forme de plaque (54) qui est faite en un matériau conducteur ayant une conductivité supérieure à celle de la plaque métallique (132) et agencée entre la plaque métallique (132) et la bobine d'antenne (11a) pour couvrir au moins une surface totale de la bobine d'antenne (11a) tout en étant isolée par rapport à la bobine d'antenne (11a).

6. Dispositif électronique (130) selon l'une quelconque des revendications précédentes, comprenant en outre :
une unité de traitement de communication (12) qui est configurée pour être entraînée par un courant s'écoulant dans la bobine d'antenne (11a) et pour exécuter une communication avec l'émetteur (120).

7. Dispositif électronique (130) selon la revendication 6, dans lequel
une pluralité de bobines d'antenne (11a) selon la revendication 1 sont agencées dans la portion de périphérie de la surface de boîtier, et
l'unité de traitement de communication (12) est configurée pour être entraînée par un courant s'écoulant dans la pluralité de bobines d'antenne (11a) agencées dans la portion de périphérie extérieure de la surface de boîtier.

8. Dispositif électronique (130) selon la revendication 6, dans lequel le dispositif électronique (130) est un dispositif électronique mobile.
